# EUROPÄISCHE PATENTSCHRIFT

(11) **EP 0 891 980 B1**
(45) Veröffentlichungstag und Bekanntmachung des Hinweises auf die Patenterteilung: **02.10.2002**
(21) Anmeldenummer: 98111004.2
(22) Anmeldetag: 16.06.1998
(51) Int. Cl.: C07F 17/00

(54) **Verfahren zur selektiven Herstellung von racemischen ansa-Metallocenkomplexen**
A process of selectively preparing racemic ansa-metallocene complexes
Procédé pour la préparation sélective de complexes d'ansa-métallocènes racemiques

(30) Priorität: 18.07.1997 DE 19730880
(43) Veröffentlichungstag der Anmeldung: 20.01.1999
(73) Patentinhaber: Basell Polyolefine GmbH, 50389 Wesseling (DE)
(72) Erfinder: Süling, Carsten, Dr., 67227 Frankenthal (DE); Huettenhofer, Mario, 78464 Konstanz (DE); Brintzinger, Hans-Herbert, Prof. Dr., 8274 Taegerswilen (CH); Schaper, Frank, 78462 Konstanz (DE)
(74) Vertreter: Meyer, Thomas Hans

(56) Entgegenhaltungen:
- EP-A1- 0 654 746
- EP-A1- 0 669 340
- EP-A1- 0 742 225
- WO-A1-95/32979
- US-A- 5 495 035
- FRITZ, H.P. et al. 1H-NMR- -Spektren von sigma-Cyclopen- tadienylen von Metallen der IV. Gruppe. Journal of Or- ganometallic Chemistry, 1965, Band 04, Seiten 313-319, XP002900249
- HERMANN, W. et al. Unsym- metrical ansa-metallocenes of zirconium and hafnium. Journal of Organo metallic Chemistry, 1996, Band 506, Seiten 351-355, XP002900250

## Beschreibung

Die vorliegende Erfindung betrifft ein Verfahren zur stereoselektiven Herstellung von racemischen ansa-Metallocenkomplexen I wie in Anspruch 1 definiert, Zinnverbindungen II wie in Anspruch 2 definiert und ein Verfahren zur Herstellung von Zinnverbindungen II, wie in Anspruch 9 definiert.

Neben der stereospezifischen Olefinpolymerisation bietet in zunehmendem Maße die enantioselektive organische Synthese interessante Anwendungsmöglichkeiten für chirale ansa-Metallocenkomplexe von Metallen der IV. Nebengruppe des Periodensystems der Elemente. Beispielhaft seien hier enantioselektive Hydrierungen prochiraler Substrate genannt, beispielsweise prochiraler Olefine, wie in R. Waymouth, P. Pino, J. Am. Chem. Soc. 112 (1990), S. 4911-4914 beschrieben, oder prochiraler Ketone, Imine und Oxime, wie in der WO 92/9545 beschrieben.

Weiterhin seien genannt die Herstellung optisch aktiver Alkene durch enantioselektive Oligomerisation, wie in W. Kaminsky et al., Angew. Chem. 101 (1989), S. 1304-1306 beschrieben, sowie die enantioselektive Cyclopolymerisation von 1,5-Hexadienen, wie in R. Waymouth, G. Coates, J. Am. Chem. Soc. 113 (1991), S. 6270 - 6271 beschrieben.

Die genannten Anwendungen erfordern im allgemeinen den Einsatz eines ansa-Metallocenkomplexes in seiner racemischen Form, d.h. ohne meso-Verbindungen. Von dem, bei der Metallocensynthes des Standes der Technik anfallenden Diastereomerengemisch (rac.- u. meso-form) muß zunächst die meso-Form abgetrennt werden. Da die meso-Form verworfen werden muß, ist die Ausbeute an racemischem ansa-Metallocenkomplex gering.

EP-A 669340 beschreibt ein Verfahren zur Herstellung von verbrückten, stereorigiden Metallocenkomplexen unter Verwendung von Organo-Zinnhalogeniden.
In diesem Verfahren werden 2 Mol Zinnverbindung pro Mol Metalloxenkomplex benötigt und die Ausbeute an Metallocenkomplex ist noch nicht zufriedenstellend.

WO 95/32979 und US-A 5,495,035 beschreiben die stereoselektive Synthese von racemischen ansa-Metallocenkomplexen, wobei eine ansa-Biscyclopentadien-Verbindung mit einem Metallamidkomplex umgesetzt wird.

Aufgabe der vorliegenden Erfindung war es daher, ein Verfahren zur selektiven Herstellung von racemischen, praktisch (NMR-Meßgenauigkeit) meso-Isomer-freien ansa-Metallocenkomplexen zu finden.

Eine weitere Aufgabe war es Zinnverbindungen zu finden, welche in geringer Menge, bezogen auf das Übergangsmetallhalogenid, mit einem Übergangsmetallhalogenid umgesetzt werden können und so, praktisch meso-freie racemische ansa-Metallocenkomplexe liefern.

Demgemäß wurde das in den Patentansprüchen definierte Verfahren, die Zinnverbindungen II und ein Verfahren zur Herstellung der Zinnverbindungen II gefunden.

Die Begriffe "meso-Form", "Racemat" und somit auch "Enantiomere" in Verbindung mit ansa-Metallocenkomplexen sind bekannt und beispielsweise in Rheingold et al., Organometallics 11 (1992), S. 1869 - 1876 definiert.

Der Begriff "praktisch meso-frei" wird hier so verstanden, daß mindestens 90 % einer Verbindung in Form des Racemats vorliegen.

Die racemischen ansa-Metallocenkomplexe, die bei dem erfindungsgemäßen Verfahren erhalten werden, sind solche der allgemeinen Formel I 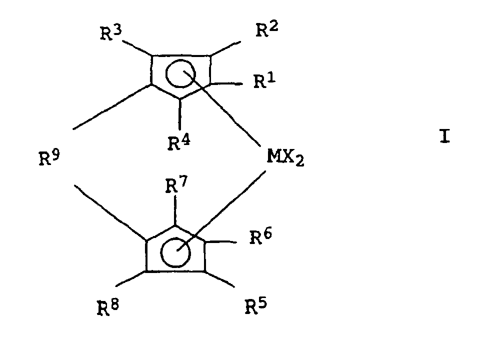 in der die Substituenten und Indices folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR¹⁰,
- wobei R¹⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁸: Wasserstoff, C₁- bis C₁₀-Alkyl, 5 - bis 7-gliedriges Cycloalkyl, das seinerseits ein C₁ - bis C₁₀-Alkyl als Substituent tragen kann, C₆- bis C₁₅-Aryl oder Arylalkyl, wobei gegebenenfalls auch zwei benachbarte Reste gemeinsam für 4 bis C-Atome aufweisende cyclische Gruppen stehen können, oder Si(R¹¹)₃ mit
- R¹¹: C₁- bis C₁₀-Alkyl, C₆- bis C₁₅-Aryl oder C₃- bis C₁₀-Cycloalkyl,
- R⁹: 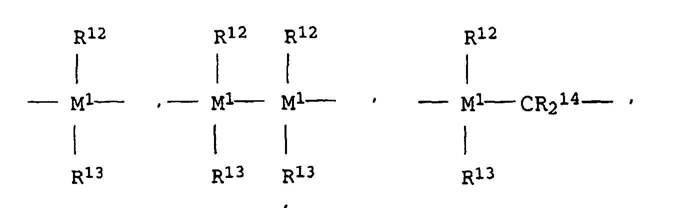 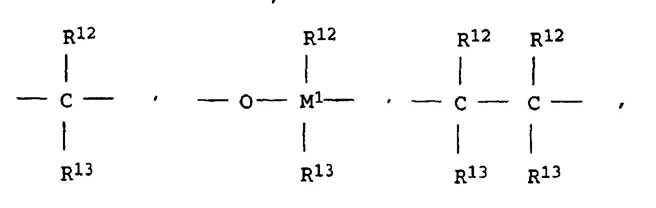 = BR¹², = AIR¹², -Ge-, -Sn-, -O-, -S-, = SO, = SO₂, = NR¹², = CO, = PR¹² oder = P(O)R¹² ist, wobei R¹², R¹³ und R14
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
- M¹: Silicium oder Germanium ist.

Besonders geeignet sind ansa-Metallocenkomplexe der allgemeinen Formel I, in der
- M: für Titan, Zirkonium oder Hafnium steht,
- X: Chlor oder C₁- bis C₆-Alkyl bedeutet,
- R¹ bis R⁸: Wasserstoff, C₁- bis C₆-Alkyl, C₁- bis C₁₂-Aryl oder wobei zwei benachbarte Reste gemeinsam für 4 bis 15, insbesondere 8 bis 12 C-Atome aufweisende cyclische Gruppen stehen
- und M¹: Silicum bedeutet.

Bevorzugt sind ansa-Metallocenkomplexe der allgemeinen Formel I, in ihrer racemischen Form, die an beiden Ringen in 2-Position an den Cyclopentadienyl-Ringen substituiert sind, d.h., daß R⁴ und R⁷ in der allgemeinen Formel I von Wasserstoff verschieden sind und insbesondere für Methyl, Ethyl, n-Propyl, iso-Propyl, n-Butyl, tert.-Butyl oder Phenyl stehen.

Ganz besonders bevorzugt sind ansa-Metallocenkomplexe der allgemeinen Formel I, in ihrer racemischen Form, die in 2- und 4-Position an den Cyclopentadienyl-Ringen substituiert sind, d.h., daß die Substituenten R⁴ und R² und R⁷ und R⁵ in I von Wasserstoff verschieden sind und insbesondere für Methyl, Ethyl, n-Propyl, iso-Propyl, n-Butyl, tert.-Butyl oder Phenyl stehen. Die Numerierung der Ringpositionen des Cyclopentadienylliganden ist wie in Formel Ia gezeigt.

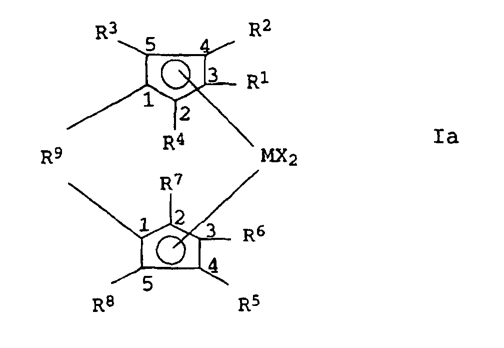

Weiterhin sind solche ansa-Metallocenkomplexe bevorzugt, die silylverbrückt sind, d. h. daß in Formel I 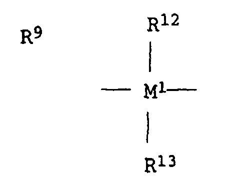 bedeutet wobei R¹² und R¹³
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ mit den sie verbindenden Atomen einen Ring bilden, und M¹ Silicium bedeutet.

Eine besonders bevorzugte Brückenstruktur R⁹ ist Dimethylsilyl.

Beispiele für besonders geeignete ansa-Metallocenkomplexe sind u.a.:
Dimethylsilandiylbis(2-methyl-4-methyl-1-cyclopentadienyl)zirkoniumdichlorid
Dimethylsilandiylbis(2-methyl-4-ethyl-1-cyclopentadienyl)zirkoniumdichlorid
Dimethylsilandiylbis(2-methyl-4-propyl-1-cyclopentadienyl)zirkoniumdichlorid
Dimethylsilandiylbis(2-methyl-4-butyl-1-cyclopentadienyl)zirkoniumdichlorid
Dimethylsilandiylbis(2-methyl-4-ⁱpropyl-1-cyclopentadienyl)zirkoniumdichlorid
Dimethylsilandiylbis(2-methyl-4-ⁱbutyl-1-cyclopentadienyl)zirkoniumdichlorid
Dimethylsilandiylbis(2-methyl-4-^{t}butyl-1-cyclopentadienyl)zirkoniumdichlorid
Dimethylsilandiylbis(2-methyl-4-trimethylsilyl-1-cyclopentadienyl)zirkoniumdichlorid
Dimethylsilandiylbis(2-methyl-4-phenyl-1-cyclopentadienyl)zirkoniumdichlorid
Dimethylsilandiylbis(2-ethyl-4-methyl-1-cyclopentadienyl)zirkoniumdichlorid
Dimethylsilandiylbis(2-ethyl-4-ethyl-1-cyclopentadienyl)zirkoniumdichlorid
Dimethylsilandiylbis(2-ethyl-4-propyl-1-cyclopentadienyl)zirkoniumdichlorid
Dimethylsilandiylbis(2-ethyl-4-butyl-1-cyclopentadienyl)zirkoniumdichlorid
Dimethylsilandiylbis(2-ethyl-4-ⁱpropyl-1-cyclopentadienyl)zirkoniumdichlorid
Dimethylsilandiylbis(2-ethyl-4-ⁱbutyl-1-cyclopentadienyl)zirkoniumdichlorid
Dimethylsilandiylbis(2-ethyl-4-^{t}butyl-1-cyclopentadienyl)zirkoniumdichlorid
Dimethylsilandiylbis(2-ethyl-4-trimethylsilyl-1-cyclopentadienyl)zirkoniumdichlorid
Dimethylsilandiylbis(2-ethyl-4-phenyl-1-cyclopentadienyl)zirkoniumdichlorid
Dimethylsilandiylbis(2-propyl-4-methyl-1-cyclopentadienyl)zirkoniumdichlorid
Dimethylsilandiylbis(2-propyl-4-ethyl-1-cyclopentadienyl)zirkoniumdichlorid
Dimethylsilandiylbis(2-propyl-4-propyl-1-cyclopentadienyl)zirkoniumdichlorid
Dimethylsilandiylbis(2-propyl-4-butyl-1-cyclopentadienyl)zirkoniumdichlorid
Dimethylsilandiylbis(2-propyl-4-ⁱpropyl-1-cyclopentadienyl)zirkoniumdichlorid
Dimethylsilandiylbis(2-propyl-4-ⁱbutyl-1-cyclopentadienyl)zirkoniumdichlorid
Dimethylsilandiylbis(2-propyl-4-^{t}butyl-1-cyclopentadienyl)zirkoniumdichlorid
Dimethylsilandiylbis(2-propyl-4-trimethylsilyl-1-cyclopentadienyl)zirkoniumdichlorid
Dimethylsilandiylbis(2-propyl-4-phenyl-1-cyclopentadienyl)zirkoniumdichlorid
Dimethylsilandiylbis(2-butyl-4-methyl-1-cyclopentadienyl)zirkoniumdichlorid
Dimethylsilandiylbis(2-butyl-4-ethyl-1-cyclopentadienyl)zirkoniumdichlorid
Dimethylsilandiylbis(2-butyl-4-propyl-1-cyclopentadienyl)zirkoniumdichlorid
Dimethylsilandiylbis(2-butyl-4-butyl-1-cyclopentadienyl)zirkoniumdichlorid
Dimethylsilandiylbis(2-butyl-4-ⁱpropyl-1-cyclopentadienyl)zirkoniumdichlorid
Dimethylsilandiylbis(2-butyl-4-ⁱbutyl-1-cyclopentadienyl)zirkoniumdichlorid
Dimethylsilandiylbis(2-butyl-4-^{t}butyl-1-cyclopentadienyl)zirkoniumdichlorid
Dimethylsilandiylbis(2-butyl-4-trimethylsilyl-1-cyclopentadienyl)zirkoniumdichlorid
Dimethylsilandiylbis(2-butyl-4-phenyl-1-cyclopentadienyl)zirkoniumdichlorid
Dimethylsilandiylbis(2-ⁱpropyl-4-methyl-1-cyclopentadienyl)zirkoniumdichlorid
Dimethylsilandiylbis(2-ⁱpropyl-4-ethyl-1-cyclopentadienyl)zirkoniumdichlorid
Dimethylsilandiylbis(2-ⁱpropyl-4-propyl-1-cyclopentadienyl)zirkoniumdichlorid
Dimethylsilandiylbis(2-ⁱpropyl-4-butyl-1-cyclopentadienyl)zirkoniumdichlorid
Dimethylsilandiylbis(2-ⁱpropyl-4-ⁱpropyl-1-cyclopentadienyl)zirkoniumdichlorid
Dimethylsilandiylbis(2-ⁱpropyl-4-ⁱbutyl-1-cyclopentadienyl)zirkoniumdichlorid
Dimethylsilandiylbis(2-ⁱpropyl-4-^{t}butyl-1-cyclopentadienyl)zirkoniumdichlorid
Dimethylsilandiylbis(2-ⁱpropyl-4-trimethylsilyl-1-cyclopentadienyl)zirkoniumdichlorid
Dimethylsilandiylbis(2-ⁱpropyl-4-phenyl-1-cyclopentadienyl)zirkoniumdichlorid
Dimethylsilandiylbis(2-^{t}butyl-4-methyl-1-cyclopentadienyl)zirkoniumdichlorid
Dimethylsilandiylbis(2-^{t}butyl-4-ethyl-1-cyclopentadienyl)zirkoniumdichlorid
Dimethylsilandiylbis(2-^{t}butyl-4-propyl-1-cyclopentadienyl)zirkoniumdichlorid
Dimethylsilandiylbis(2-^{t}butyl-4-butyl-1-cyclopentadienyl)zirkoniumdichlorid
Dimethylsilandiylbis(2-^{t}butyl-4-ⁱpropyl-1-cyclopentadienyl)zirkoniumdichlorid
Dimethylsilandiylbis(2-^{t}butyl-4-ⁱbutyl-1-cyclopentadienyl)zirkoniumdichlorid
Dimethylsilandiylbis(2-^{t}butyl-4-^{t}butyl-1-cyclopentadienyl)zirkoniumdichlorid
Dimethylsilandiylbis(2-^{t}butyl-4-trimethylsilyl-1-cyclopentadienyl)zirkoniumdichlorid
Dimethylsilandiylbis(2-^{t}butyl-4-phenyl-1-cyclopentadienyl)zirkoniumdichlorid
Dimethylsilandiylbis(2-trimethylsilyl-4-methyl-1-cyclopentadienyl)zirkoniumdichlorid
Dimethylsilandiylbis(2-trimethylsilyl-4-ethyl-1-cyclopentadienyl)zirkoniumdichlorid
Dimethylsilandiylbis(2-trimethylsilyl-4-propyl-1-cyclopentadienyl)zirkoniumdichlorid
Dimethylsilandiylbis(2-trimethylsilyl-4-butyl-1-cyclopentadienyl)zirkoniumdichlorid
Dimethylsilandiylbis(2-trimethylsilyl-4-ⁱpropyl-1-cyclopentadienyl)zirkoniumdichlorid
Dimethylsilandiylbis(2-trimethylsilyl-4-ⁱbutyl-1-cyclopentadienyl)zirkoniumdichlorid
Dimethylsilandiylbis(2-trimethylsilyl-4-^{t}butyl-1-cyclopentadienyl)zirkoniumdichlorid
Dimethylsilandiylbis(2-trimethylsilyl-4-trimethylsilyl-1-cyclopentadienyl)zirkoniumdichlorid
Dimethylsilandiylbis(2-trimethylsilyl-4-phenyl-1-cyclopentadienyl)zirkoniumdichlorid
Dimethylsilandiylbis(2-phenyl-4-methyl-1-cyclopentadienyl)zirkoniumdichlorid
Dimethylsilandiylbis(2-phenyl-4-ethyl-1-cyclopentadienyl)zirkoniumdichlorid
Dimethylsilandiylbis(2-phenyl-4-propyl-1-cyclopentadienyl)zirkoniumdichlorid
Dimethylsilandiylbis(2-phenyl-4-butyl-1-cyclopentadienyl)zirkoniumdichlorid
Dimethylsilandiylbis(2-phenyl-4-ⁱpropyl-1-cyclopentadienyl)zirkoniumdichlorid
Dimethylsilandiylbis(2-phenyl-4-ⁱbutyl-1-cyclopentadienyl)zirkoniumdichlorid
Dimethylsilandiylbis(2-phenyl-4-^{t}butyl-1-cyclopentadienyl)zirkoniumdichlorid
Dimethylsilandiylbis(2-phenyl-4-trimethylsilyl-1-cyclopentadienyl)zirkoniumdichlorid
Dimethylsilandiylbis(2-phenyl-4-phenyl-1-cyclopentadienyl)zirkoniumdichlorid
Dimethylsilandiylbis(2-methyl-1-indenyl)zirkoniumdichlorid
Dimethylsilandiylbis(2-ethyl-1-indenyl)zirkoniumdichlorid
Dimethylsilandiylbis(2-propyl-1-indenyl)zirkoniumdichlorid
Dimethylsilandiylbis(2-butyl-1-indenyl)zirkoniumdichlorid
Dimethylsilandiylbis(2-ⁱpropyl-1-indenyl)zirkoniumdichlorid
Dimethylsilandiylbis(2-^{t}butyl-1-indenyl)zirkoniumdichlorid
Dimethylsilandiylbis(2-trimethylsilyl-1-indenyl)zirkoniumdichlorid
Dimethylsilandiylbis(2-phenyl-1-indenyl)zirkoniumdichlorid
Dimethylsilandiylbis(2-methyl-4,5,6,7-tetrahydro-1-indenyl)zirkoniumdichlorid
Dimethylsilandiylbis(2-ethyl-4,5,6,7-tetrahydro-1-indenyl)zirkoniumdichlorid
Dimethylsilandiylbis(2-propyl-4,5,6,7-tetrahydro-1-indenyl)zirkoniumdichlorid
Dimethylsilandiylbis(2-butyl-4,5,6,7-tetrahydro-1-indenyl)zirkoniumdichlorid
Dimethylsilandiylbis(2-ⁱpropyl-4,5,6,7-tetrahydro-1-indenyl)zirkoniumdichlorid
Dimethylsilandiylbis(2-^{t}butyl-4,5,6,7-tetrahydro-1-indenyl)zirkoniumdichlorid
Dimethylsilandiylbis(2-trimethylsilyl-4,5,6,7-tetrahydro-1-indenyl)zirkoniumdichlorid
Dimethylsilandiylbis(2-phenyl-4,5,6,7-tetrahydro-1-indenyl)zirkoniumdichlorid
Dimethylsilandiylbis(2-methyl-4,7-dimethyl-1-indenyl)zirkoniumdichlorid
Dimethylsilandiylbis(2-ethyl-4,7-dimethyl-1-indenyl)zirkoniumdichlorid
Dimethylsilandiylbis(2-propyl-4,7-dimethyl-1-indenyl)zirkoniumdichlorid
Dimethylsilandiylbis(2-butyl-4,7-dimethyl-1-indenyl)zirkoniumdichlorid
Dimethylsilandiylbis(2-ⁱpropyl-4,7-dimethyl-1-indenyl)zirkoniumdichlorid
Dimethylsilandiylbis(2-^{t}butyl-4,7-dimethyl-1-indenyl)zirkoniumdichlorid
Dimethylsilandiylbis(2-trimethylsilyl-4,7-dimethyl-1-indenyl)zirkoniumdichlorid
Dimethylsilandiylbis(2-phenyl-4,7-dimethyl-1-indenyl)zirkoniumdichlorid
Dimethylsilandiylbis(2-methyl-4,6-di-ⁱpropyl-1-indenyl)zirkoniumdichlorid
Dimethylsilandiylbis(2-ethyl-4,6-di-ⁱpropyl-1-indenyl)zirkoniumdichlorid
Dimethylsilandiylbis(2-propyl-4,6-di-ⁱpropyl-1-indenyl)zirkoniumdichlorid
Dimethylsilandiylbis(2-butyl-4,6-di-ⁱpropyl-1-indenyl)zirkoniumdichlorid
Dimethylsilandiylbis(2-ⁱpropyl-4,6-di-ⁱpropyl-1-indenyl)zirkoniumdichlorid
Dimethylsilandiylbis(2-^{t}butyl-4,6-di-ⁱpropyl-1-indenyl)zirkoniumdichlorid
Dimethylsilandiylbis(2-trimethylsilyl-4,6-di-ⁱpropyl-1-indenyl)zirkoniumdichlorid
Dimethylsilandiylbis(2-phenyl-4,6-di-ⁱpropyl-1-indenyl)zirkoniumdichlorid
Dimethylsilandiylbis(2-methyl-1-benzindenyl)zirkoniumdichlorid
Dimethylsilandiylbis(2-ethyl-1-benzindenyl)zirkoniumdichlorid
Dimethylsilandiylbis(2-propyl-1-benzindenyl)zirkoniumdichlorid
Dimethylsilandiylbis(2-butyl-1-benzindenyl)zirkoniumdichlorid
Dimethylsilandiylbis(2-ⁱpropyl-1-benzindenyl)zirkoniumdichlorid
Dimethylsilandiylbis(2-^{t}butyl-1-benzindenyl)zirkoniumdichlorid
Dimethylsilandiylbis(2-trimethylsilyl-1-benzindenyl)zirkoniumdichlorid
Dimethylsilandiylbis(2-phenyl-1-benzindenyl)zirkoniumdichlorid
Dimethylsilandiylbis(2-methyl-4-phenyl-1-indenyl)zirkoniumdichlorid
Dimethylsilandiylbis(2-ethyl-4-phenyl-1-indenyl)zirkoniumdichlorid
Dimethylsilandiylbis(2-propyl-4-phenyl-1-indenyl)zirkoniumdichlorid
Dimethylsilandiylbis(2-butyl-4-phenyl-1-indenyl)zirkoniumdichlorid
Dimethylsilandiylbis(2-ⁱpropyl-4-phenyl-1-indenyl)zirkoniumdichlorid
Dimethylsilandiylbis(2-^{t}butyl-4-phenyl-1-indenyl)zirkoniumdichlorid
Dimethylsilandiylbis(2-trimethylsilyl-4-phenyl-1-indenyl)zirkoniumdichlorid
Dimethylsilandiylbis(2-phenyl-4-phenyl-1-indenyl)zirkoniumdichlorid
Dimethylsilandiylbis(2-methyl-4-naphthyl-1-indenyl)zirkoniumdichlorid
Dimethylsilandiylbis(2-ethyl-4-naphthyl-1-indenyl)zirkoniumdichlorid
Dimethylsilandiylbis(2-propyl-4-naphthyl-1-indenyl)zirkoniumdichlorid
Dimethylsilandiylbis(2-butyl-4-naphthyl-1-indenyl)zirkoniumdichlorid
Dimethylsilandiylbis(2-ⁱpropyl-4-naphthyl-1-indenyl)zirkoniumdichlorid
Dimethylsilandiylbis(2-^{t}butyl-4-naphthyl-1-indenyl)zirkoniumdichlorid
Dimethylsilandiylbis(2-trimethylsilyl-4-naphthyl-1-indenyl)zirkoniumdichlorid
Dimethylsilandiylbis(2-phenyl-4-naphthyl-1-indenyl)zirkoniumdichlorid
Dimethylsilandiylbis(2-methyl-4-methyl-1-cyclopentadienyl)titaniumdichlorid
Dimethylsilandiylbis(2-methyl-4-ethyl-1-cyclopentadienyl)titaniumdichlorid
Dimethylsilandiylbis(2-methyl-4-propyl-1-cyclopentadienyl)titaniumdichlorid
Dimethylsilandiylbis(2-methyl-4-butyl-1-cyclopentadienyl)titaniumdichlorid
Dimethylsilandiylbis(2-methyl-4-ⁱpropyl-1-cyclopentadienyl)titaniumdichlorid
Dimethylsilandiylbis(2-methyl-4-ⁱbutyl-1-cyclopentadienyl)titaniumdichlorid
Dimethylsilandiylbis(2-methyl-4-^{t}butyl-1-cyclopentadienyl)titaniumdichlorid
Dimethylsilandiylbis(2-methyl-4-trimethylsilyl-1-cyclopentadienyl)titaniumdichlorid
Dimethylsilandiylbis(2-methyl-4-phenyl-1-cyclopentadienyl)titaniumdichlorid
Dimethylsilandiylbis(2-ethyl-4-methyl-1-cyclopentadienyl)titaniumdichlorid
Dimethylsilandiylbis(2-ethyl-4-ethyl-1-cyclopentadienyl)titaniumdichlorid
Dimethylsilandiylbis(2-ethyl-4-propyl-1-cyclopentadienyl)titaniumdichlorid
Dimethylsilandiylbis(2-ethyl-4-butyl-1-cyclopentadienyl)titaniumdichlorid
Dimethylsilandiylbis(2-ethyl-4-ⁱpropyl-1-cyclopentadienyl)titaniumdichlorid
Dimethylsilandiylbis(2-ethyl-4-ⁱbutyl-1-cyclopentadienyl)titaniumdichlorid
Dimethylsilandiylbis(2-ethyl-4-^{t}butyl-1-cyclopentadienyl)titaniumdichlorid
Dimethylsilandiylbis(2-ethyl-4-trimethylsilyl-1-cyclopentadienyl)titaniumdichlorid
Dimethylsilandiylbis(2-ethyl-4-phenyl-1-cyclopentadienyl)titaniumdichlorid
Dimethylsilandiylbis(2-propyl-4-methyl-1-cyclopentadienyl)titaniumdichlorid
Dimethylsilandiylbis(2-propyl-4-ethyl-1-cyclopentadienyl)titaniumdichlorid
Dimethylsilandiylbis(2-propyl-4-propyl-1-cyclopentadienyl)titaniumdichlorid
Dimethylsilandiylbis(2-propyl-4-butyl-1-cyclopentadienyl)titaniumdichlorid
Dimethylsilandiylbis(2-propyl-4-ⁱpropyl-1-cyclopentadienyl)titaniumdichlorid
Dimethylsilandiylbis(2-propyl-4-ⁱbutyl-1-cyclopentadienyl)titaniumdichlorid
Dimethylsilandiylbis(2-propyl-4-^{t}butyl-1-cyclopentadienyl)titaniumdichlorid
Dimethylsilandiylbis(2-propyl-4-trimethylsilyl-1-cyclopentadienyl)titaniumdichlorid
Dimethylsilandiylbis(2-propyl-4-phenyl-1-cyclopentadienyl)titaniumdichlorid
Dimethylsilandiylbis(2-butyl-4-methyl-1-cyclopentadienyl)titaniumdichlorid
Dimethylsilandiylbis(2-butyl-4-ethyl-1-cyclopentadienyl)titaniumdichlorid
Dimethylsilandiylbis(2-butyl-4-propyl-1-cyclopentadienyl)titaniumdichlorid
Dimethylsilandiylbis(2-butyl-4-butyl-1-cyclopentadienyl)titaniumdichlorid
Dimethylsilandiylbis(2-butyl-4-ⁱpropyl-1-cyclopentadienyl)titaniumdichlorid
Dimethylsilandiylbis(2-butyl-4-ⁱbutyl-1-cyclopentadienyl)titaniumdichlorid
Dimethylsilandiylbis(2-butyl-4-^{t}butyl-1-cyclopentadienyl)titaniumdichlorid
Dimethylsilandiylbis(2-butyl-4-trimethylsilyl-1-cyclopentadienyl)titaniumdichlorid
Dimethylsilandiylbis(2-butyl-4-phenyl-1-cyclopentadienyl)titaniumdichlorid
Dimethylsilandiylbis(2-ⁱpropyl-4-methyl-1-cyclopentadienyl)titaniumdichlorid
Dimethylsilandiylbis(2-ⁱpropyl-4-ethyl-1-cyclopentadienyl)titaniumdichlorid
Dimethylsilandiylbis(2-ⁱpropyl-4-propyl-1-cyclopentadienyl)titaniumdichlorid
Dimethylsilandiylbis(2-ⁱpropyl-4-butyl-1-cyclopentadienyl)titaniumdichlorid
Dimethylsilandiylbis(2-ⁱpropyl-4-ⁱpropyl-1-cyclopentadienyl)titaniumdichlorid
Dimethylsilandiylbis(2-ⁱpropyl-4-ⁱbutyl-1-cyclopentadienyl)titaniumdichlorid
Dimethylsilandiylbis(2-ⁱpropyl-4-^{t}butyl-1-cyclopentadienyl)titaniumdichlorid
Dimethylsilandiylbis(2-ⁱpropyl-4-trimethylsilyl-1-cyclopentadienyl)titaniumdichlorid
Dimethylsilandiylbis(2-ⁱpropyl-4-phenyl-1-cyclopentadienyl)titaniumdichlorid
Dimethylsilandiylbis(2-^{t}butyl-4-methyl-1-cyclopentadienyl)titaniumdichlorid
Dimethylsilandiylbis(2-^{t}butyl-4-ethyl-1-cyclopentadienyl)titaniumdichlorid
Dimethylsilandiylbis(2-^{t}butyl-4-propyl-1-cyclopentadienyl)titaniumdichlorid
Dimethylsilandiylbis(2-^{t}butyl-4-butyl-1-cyclopentadienyl)titaniumdichlorid
Dimethylsilandiylbis(2-^{t}butyl-4-ⁱpropyl-1-cyclopentadienyl)titaniumdichlorid
Dimethylsilandiylbis(2-^{t}butyl-4-ⁱbutyl-1-cyclopentadienyl)titaniumdichlorid
Dimethylsilandiylbis(2-^{t}butyl-4-^{t}butyl-1-cyclopentadienyl)titaniumdichlorid
Dimethylsilandiylbis(2-^{t}butyl-4-trimethylsilyl-1-cyclopentadienyl)titaniumdichlorid
Dimethylsilandiylbis(2-^{t}butyl-4-phenyl-1-cyclopentadienyl)titaniumdichlorid
Dimethylsilandiylbis(2-trimethylsilyl-4-methyl-1-cyclopentadienyl)titaniumdichlorid
Dimethylsilandiylbis(2-trimethylsilyl-4-ethyl-1-cyclopentadienyl)titaniumdichlorid
Dimethylsilandiylbis(2-trimethylsilyl-4-propyl-1-cyclopentadienyl)titaniumdichlorid
Dimethylsilandiylbis(2-trimethylsilyl-4-butyl-1-cyclopentadienyl)titaniumdichlorid
Dimethylsilandiylbis(2-trimethylsilyl-4-ⁱpropyl-1-cyclopentadienyl)titaniumdichlorid
Dimethylsilandiylbis(2-trimethylsilyl-4-ⁱbutyl-1-cyclopentadienyl)titaniumdichlorid
Dimethylsilandiylbis(2-trimethylsilyl-4-^{t}butyl-1-cyclopentadienyl)titaniumdichlorid
Dimethylsilandiylbis(2-trimethylsilyl-4-trimethylsilyl-1-cyclopentadienyl)titaniumdichlorid
Dimethylsilandiylbis(2-trimethylsilyl-4-phenyl-1-cyclopentadienyl)titaniumdichlorid
Dimethylsilandiylbis(2-phenyl-4-methyl-1-cyclopentadienyl)titaniumdichlorid
Dimethylsilandiylbis(2-phenyl-4-ethyl-1-cyclopentadienyl)titaniumdichlorid
Dimethylsilandiylbis(2-phenyl-4-propyl-1-cyclopentadienyl)titaniumdichlorid
Dimethylsilandiylbis(2-phenyl-4-butyl-1-cyclopentadienyl)titaniumdichlorid
Dimethylsilandiylbis(2-phenyl-4-ⁱpropyl-1-cyclopentadienyl)titaniumdichlorid
Dimethylsilandiylbis(2-phenyl-4-ⁱbutyl-1-cyclopentadienyl)titaniumdichlorid
Dimethylsilandiylbis(2-phenyl-4-^{t}butyl-1-cyclopentadienyl)titaniumdichlorid
Dimethylsilandiylbis(2-phenyl-4-trimethylsilyl-1-cyclopentadienyl)titaniumdichlorid
Dimethylsilandiylbis(2-phenyl-4-phenyl-1-cyclopentadienyl)titaniumdichlorid
Dimethylsilandiylbis(2-methyl-1-indenyl)titaniumdichlorid
Dimethylsilandiylbis(2-ethyl-1-indenyl)titaniumdichlorid
Dimethylsilandiylbis(2-propyl-1-indenyl)titaniumdichlorid
Dimethylsilandiylbis(2-butyl-1-indenyl)titaniumdichlorid
Dimethylsilandiylbis(2-ⁱpropyl-1-indenyl)titaniumdichlorid
Dimethylsilandiylbis(2-^{t}butyl-1-indenyl)titaniumdichlorid
Dimethylsilandiylbis(2-trimethylsilyl-1-indenyl)titaniumdichlorid
Dimethylsilandiylbis(2-phenyl-1-indenyl)titaniumdichlorid
Dimethylsilandiylbis(2-methyl-4,5,6,7-tetrahydro-1-indenyl)titaniumdichlorid
Dimethylsilandiylbis(2-ethyl-4,5,6,7-tetrahydro-1-indenyl)titaniumdichlorid
Dimethylsilandiylbis(2-propyl-4,5,6,7-tetrahydro-1-indenyl)titaniumdichlorid
Dimethylsilandiylbis(2-butyl-4,5,6,7-tetrahydro-1-indenyl)titaniumdichlorid
Dimethylsilandiylbis(2-ⁱpropyl-4,5,6,7-tetrahydro-1-indenyl)titaniumdichlorid
Dimethylsilandiylbis(2-^{t}butyl-4,5,6,7-tetrahydro-1-indenyl)titaniumdichlorid
Dimethylsilandiylbis(2-trimethylsilyl-4,5,6,7-tetrahydro-1-indenyl)titaniumdichlorid
Dimethylsilandiylbis(2-phenyl-4,5,6,7-tetrahydro-1-indenyl)titaniumdichlorid
Dimethylsilandiylbis(2-methyl-4,7-dimethyl-1-indenyl)titaniumdichlorid
Dimethylsilandiylbis(2-ethyl-4,7-dimethyl-1-indenyl)titaniumdichlorid
Dimethylsilandiylbis(2-propyl-4,7-dimethyl-1-indenyl)titaniumdichlorid
Dimethylsilandiylbis(2-butyl-4,7-dimethyl-1-indenyl)titaniumdichlorid
Dimethylsilandiylbis(2-ⁱpropyl-4,7-dimethyl-1-indenyl)titaniumdichlorid
Dimethylsilandiylbis(2-^{t}butyl-4,7-dimethyl-1-indenyl)titaniumdichlorid
Dimethylsilandiylbis(2-trimethylsilyl-4,7-dimethyl-1-indenyl)titaniumdichlorid
Dimethylsilandiylbis(2-phenyl-4,7-dimethyl-1-indenyl)titaniumdichlorid
Dimethylsilandiylbis(2-methyl-4,6-di-ⁱpropyl-1-indenyl)titaniumdichlorid
Dimethylsilandiylbis(2-ethyl-4,6-di-ⁱpropyl-1-indenyl)titaniumdichlorid
Dimethylsilandiylbis(2-propyl-4,6-di-ⁱpropyl-1-indenyl)titaniumdichlorid
Dimethylsilandiylbis(2-butyl-4,6-di-ⁱpropyl-1-indenyl)titaniumdichlorid
Dimethylsilandiylbis(2-ⁱpropyl-4,6-di-ⁱpropyl-1-indenyl)titaniumdichlorid
Dimethylsilandiylbis(2-^{t}butyl-4,6-di-ⁱpropyl-1-indenyl)titaniumdichlorid
Dimethylsilandiylbis(2-trimethylsilyl-4,6-di-ⁱpropyl-1-indenyl)titaniumdichlorid
Dimethylsilandiylbis(2-phenyl-4,6-di-ⁱpropyl-1-indenyl)titaniumdichlorid
Dimethylsilandiylbis(2-methyl-1-benzindenyl)titaniumdichlorid
Dimethylsilandiylbis(2-ethyl-1-benzindenyl)titaniumdichlorid
Dimethylsilandiylbis(2-propyl-1-benzindenyl)titaniumdichlorid
Dimethylsilandiylbis(2-butyl-1-benzindenyl)titaniumdichlorid
Dimethylsilandiylbis(2-ⁱpropyl-1-benzindenyl)titaniumdichlorid
Dimethylsilandiylbis(2-^{t}butyl-1-benzindenyl)titaniumdichlorid
Dimethylsilandiylbis(2-trimethylsilyl-1-benzindenyl)titaniumdichlorid
Dimethylsilandiylbis(2-phenyl-1-benzindenyl)titaniumdichlorid
Dimethylsilandiylbis(2-methyl-4-phenyl-1-indenyl)titaniumdichlorid
Dimethylsilandiylbis(2-ethyl-4-phenyl-1-indenyl)titaniumdichlorid
Dimethylsilandiylbis(2-propyl-4-phenyl-1-indenyl)titaniumdichlorid
Dimethylsilandiylbis(2-butyl-4-phenyl-1-indenyl)titaniumdichlorid
Dimethylsilandiylbis(2-ⁱpropyl-4-phenyl-1-indenyl)titaniumdichlorid
Dimethylsilandiylbis(2-^{t}butyl-4-phenyl-1-indenyl)titaniumdichlorid
Dimethylsilandiylbis(2-trimethylsilyl-4-phenyl-1-indenyl)titaniumdichlorid
Dimethylsilandiylbis(2-phenyl-4-phenyl-1-indenyl)titaniumdichlorid
Dimethylsilandiylbis(2-methyl-4-naphthyl-1-indenyl)titaniumdichlorid
Dimethylsilandiylbis(2-ethyl-4-naphthyl-1-indenyl)titaniumdichlorid
Dimethylsilandiylbis(2-propyl-4-naphthyl-1-indenyl)titaniumdichlorid
Dimethylsilandiylbis(2-butyl-4-naphthyl-1-indenyl)titaniumdichlorid
Dimethylsilandiylbis(2-ⁱpropyl-4-naphthyl-1-indenyl)titaniumdichorid
Dimethylsilandiylbis(2-^{t}butyl-4-naphthyl-1-indenyl)titaniumdichlorid
Dimethylsilandiylbis(2-trimethylsilyl-4-naphthyl-1-indenyl)titaniumdichlorid
Dimethylsilandiylbis(2-phenyl-4-naphthyl-1-indenyl)titaniumdichlorid
Dimethylsilandiylbis(2-methyl-4-methyl-1-cyclopentadienyl)hafniumdichlorid
Dimethylsilandiylbis(2-methyl-4-ethyl-1-cyclopentadienyl)hafniumdichlorid
Dimethylsilandiylbis(2-methyl-4-propyl-1-cyclopentadienyl)hafniumdichlorid
Dimethylsilandiylbis(2-methyl-4-butyl-1-cyclopentadienyl)hafniumdichlorid
Dimethylsilandiylbis(2-methyl-4-ⁱpropyl-1-cyclopentadienyl)hafniumdichlorid
Dimethylsilandiylbis(2-methyl-4-ⁱbutyl-1-cyclopentadienyl)hafniumdichlorid
Dimethylsilandiylbis(2-methyl-4-^{t}butyl-1-cyclopentadienyl)hafniumdichlorid
Dimethylsilandiylbis(2-methyl-4-trimethylsilyl-1-cyclopentadienyl)hafniumdichlorid
Dimethylsilandiylbis(2-methyl-4-phenyl-1-cyclopentadienyl)hafniumdichlorid
Dimethylsilandiylbis(2-ethyl-4-methyl-1-cyclopentadienyl)hafniumdichlorid
Dimethylsilandiylbis(2-ethyl-4-ethyl-1-cyclopentadienyl)hafniumdichlorid
Dimethylsilandiylbis(2-ethyl-4-propyl-1-cyclopentadienyl)hafniumdichlorid
Dimethylsilandiylbis(2-ethyl-4-butyl-1-cyclopentadienyl)hafniumdichlorid
Dimethylsilandiylbis(2-ethyl-4-ⁱpropyl-1-cyclopentadienyl)hafniumdichlorid
Dimethylsilandiylbis(2-ethyl-4-ⁱbutyl-1-cyclopentadienyl)hafniumdichlorid
Dimethylsilandiylbis(2-ethyl-4-^{t}butyl-1-cyclopentadienyl)hafniumdichlorid
Dimethylsilandiylbis(2-ethyl-4-trimethylsilyl-1-cyclopentadienyl)hafniumdichlorid
Dimethylsilandiylbis(2-ethyl-4-phenyl-1-cyclopentadienyl)hafniumdichlorid
Dimethylsilandiylbis(2-propyl-4-methyl-1-cyclopentadienyl)hafniumdichlorid
Dimethylsilandiylbis(2-propyl-4-ethyl-1-cyclopentadienyl)hafniumdichlorid
Dimethylsilandiylbis(2-propyl-4-propyl-1-cyclopentadienyl)hafniumdichlorid
Dimethylsilandiylbis(2-propyl-4-butyl-1-cyclopentadienyl)hafniumdichlorid
Dimethylsilandiylbis(2-propyl-4-ⁱpropyl-1-cyclopentadienyl)hafniumdichlorid
Dimethylsilandiylbis(2-propyl-4-ⁱbutyl-1-cyclopentadienyl)hafniumdichlorid
Dimethylsilandiylbis(2-propyl-4-^{t}butyl-1-cyclopentadienyl)hafniumdichlorid
Dimethylsilandiylbis(2-propyl-4-trimethylsilyl-1-cyclopentadienyl)hafniumdichlorid
Dimethylsilandiylbis(2-propyl-4-phenyl-1-cyclopentadienyl)hafniumdichlorid
Dimethylsilandiylbis(2-butyl-4-methyl-1-cyclopentadienyl)hafniumdichlorid
Dimethylsilandiylbis(2-butyl-4-ethyl-1-cyclopentadienyl)hafniumdichlorid
Dimethylsilandiylbis(2-butyl-4-propyl-1-cyclopentadienyl)hafniumdichlorid
Dimethylsilandiylbis(2-butyl-4-butyl-1-cyclopentadienyl)hafniumdichlorid
Dimethylsilandiylbis(2-butyl-4-ⁱpropyl-1-cyclopentadienyl)hafniumdichlorid
Dimethylsilandiylbis(2-butyl-4-ⁱbutyl-1-cyclopentadienyl)hafniumdichlorid
Dimethylsilandiylbis(2-butyl-4-^{t}butyl-1-cyclopentadienyl)hafniumdichlorid
Dimethylsilandiylbis(2-butyl-4-trimethylsilyl-1-cyclopentadienyl)hafniumdichlorid
Dimethylsilandiylbis(2-butyl-4-phenyl-1-cyclopentadienyl)hafniumdichlorid
Dimethylsilandiylbis(2-ⁱpropyl-4-methyl-1-cyclopentadienyl)hafniumdichlorid
Dimethylsilandiylbis(2-ⁱpropyl-4-ethyl-1-cyclopentadienyl)hafniumdichlorid
Dimethylsilandiylbis(2-ⁱpropyl-4-propyl-1-cyclopentadienyl)hafniumdichlorid
Dimethylsilandiylbis(2-ⁱpropyl-4-butyl-1-cyclopentadienyl)hafniumdichlorid
Dimethylsilandiylbis(2-ⁱpropyl-4-ⁱpropyl-1-cyclopentadienyl)hafniumdichlorid
Dimethylsilandiylbis(2-ⁱpropyl-4-ⁱbutyl-1-cyclopentadienyl)hafniumdichlorid
Dimethylsilandiylbis(2-ⁱpropyl-4-^{t}butyl-1-cyclopentadienyl)hafniumdichlorid
Dimethylsilandiylbis(2-ⁱpropyl-4-trimethylsilyl-1-cyclopentadienyl)hafniumdichlorid
Dimethylsilandiylbis(2-ⁱpropyl-4-phenyl-1-cyclopentadienyl)hafniumdichlorid
Dimethylsilandiylbis(2-^{t}butyl-4-methyl-1-cyclopentadienyl)hafniumdichlorid
Dimethylsilandiylbis(2-^{t}butyl-4-ethyl-1-cyclopentadienyl)hafniumdichlorid
Dimethylsilandiylbis(2-^{t}butyl-4-propyl-1-cyclopentadienyl)hafniumdichlorid
Dimethylsilandiylbis(2-^{t}butyl-4-butyl-2-cyclopentadienyl)hafniumdichlorid
Dimethylsilandiylbis(2-^{t}butyl-4-ⁱpropyl-1-cyclopentadienyl)hafniumdichlorid
Dimethylsilandiylbis(2-^{t}butyl-4-ⁱbutyl-1-cyclopentadienyl)hafniumdichlorid
Dimethylsilandiylbis(2-^{t}butyl-4-ⁱbutyl-1-cyclopentadienyl)hafniumdichlorid
Dimethylsilandiylbis(2-^{t}butyl-4-trimethylsilyl-1-cyclopentadienyl)hafniumdichlorid
Dimethylsilandiylbis(2-^{t}butyl-4-^{t}butyl-1-cyclopentadienyl)hafniumdichlorid
Dimethylsilandiylbis(2-trimethylsilyl-4-methyl-1-cyclopentadienyl)hafniumdichlorid
Dimethylsilandiylbis(2-trimethylsilyl-4-ethyl-1-cyclopentadienyl)hafniumdichlorid
Dimethylsilandiylbis(2-trimethylsilyl-4-propyl-1-cyclopentadienyl)hafniumdichlorid
Dimethylsilandiylbis(2-trimethylsilyl-4-butyl-1-cyclopentadienyl)hafniumdichlorid
Dimethylsilandiylbis(2-trimethylsilyl-4-ⁱpropyl-1-cyclopentadienyl)hafniumdichlorid
Dimethylsilandiylbis(2-trimethylsilyl-4-ⁱbutyl-1-cyclopentadienyl)hafniumdichlorid
Dimethylsilandiylbis(2-trimethylsilyl-4-^{t}butyl-1-cyclopentadienyl)hafniumdichlorid
Dimethylsilandiylbis(2-trimethylsilyl-4-trimethylsilyl-1-cyclopentadienyl)hafniumdichlorid
Dimethylsilandiylbis(2-trimethylsilyl-4-phenyl-1-cyclopentadienyl)hafniumdichlorid
Dimethylsilandiylbis(2-phenyl-4-methyl-1-cyclopentadienyl)hafniumdichlorid
Dimethylsilandiylbis(2-phenyl-4-ethyl-1-cyclopentadienyl)hafniumdichlorid
Dimethylsilandiylbis(2-phenyl-4-propyl-1-cyclopentadienyl)hafniumdichlorid
Dimethylsilandiylbis(2-phenyl-4-butyl-1-cyclopentadienyl)hafniumdichlorid
Dimethylsilandiylbis(2-phenyl-4-ⁱpropyl-1-cyclopentadienyl)hafniumdichlorid
Dimethylsilandiylbis(2-phenyl-4-ⁱbutyl-1-cyclopentadienyl)hafniumdichlorid
Dimethylsilandiylbis(2-phenyl-4-^{t}butyl-1-cyclopentadienyl)hafniumdichlorid
Dimethylsilandiylbis(2-phenyl-4-trimethylsilyl-1-cyclopentadienyl)hafniumdichlorid
Dimethylsilandiylbis(2-phenyl-4-phenyl-1-cyclopentadienyl)hafniumdichlorid
Dimethylsilandiylbis (2-methyl-1-indenyl)hafniumdichlorid
Dimethylsilandiylbis(2-ethyl-1-indenyl)hafniumdichlorid
Dimethylsilandiylbis(2-propyl-1-indenyl)hafniumdichlorid
Dimethylsilandiylbis(2-butyl-1-indenyl)hafniumdichlorid
Dimethylsilandiylbis(2-ⁱpropyl-1-indenyl)hafniumdichlorid
Dimethylsilandiylbis(2-^{t}butyl-1-indenyl)hafniumdichlorid
Dimethylsilandiylbis(2-trimethylsilyl-1-indenyl)hafniumdichlorid
Dimethylsilandiylbis(2-phenyl-1-indenyl)hafniumdichlorid
Dimethylsilandiylbis(2-methyl-4,5,6,7-tetrahydro-1-indenyl)hafniumdichlorid
Dimethylsilandiylbis(2-ethyl-4,5,6,7-tetrahydro-1-indenyl)hafniumdichlorid
Dimethylsilandiylbis(2-propyl-4,5,6,7-tetrahydro-1-indenyl)hafniumdichlorid
Dimethylsilandiylbis(2-butyl-4,5,6,7-tetrahydro-1-indenyl)hafniumdichlorid
Dimethylsilandiylbis(2-ⁱpropyl-4,5,6,7-tetrahydro-1-indenyl)hafniumdichlorid
Dimethylsilandiylbis(2-^{t}butyl-4,5,6,7-tetrahydro-1-indenyl)hafniumdichlorid
Dimethylsilandiylbis(2-trimethylsilyl-4,5,6,7-tetrahydro-1-indenyl)hafniumdichlorid
Dimethylsilandiylbis(2-phenyl-4,5,6,7-tetrahydro-1-indenyl)hafniumdichlorid
Dimethylsilandiylbis(2-methyl-4,7-dimethyl-1-indenyl)hafniumdichlorid
Dimethylsilandiylbis(2-ethyl-4,7-dimethyl-1-indenyl)hafniumdichlorid
Dimethylsilandiylbis(2-propyl-4,7-dimethyl-1-indenyl)hafniumdichlorid
Dimethylsilandiylbis(2-butyl-4,7-dimethyl-1-indenyl)hafniumdichlorid
Dimethylsilandiylbis(2-ⁱpropyl-4,7-dimethyl-1-indenyl)hafniumdichlorid
Dimethylsilandiylbis(2-^{t}butyl-4,7-dimethyl-1-indenyl)hafniumdichlorid
Dimethylsilandiylbis(2-trimethylsilyl-4,7-dimethyl-1-indenyl)hafniumdichlorid
Dimethylsilandiylbis(2-phenyl-4,7-dimethyl-1-indenyl)hafniumdichlorid
Dimethylsilandiylbis(2-methyl-4,6-di-ⁱpropyl-1-indenyl)hafniumdichlorid
Dimethylsilandiylbis(2-ethyl-4,6-di-ⁱpropyl-1-indenyl)hafniumdichlorid
Dimethylsilandiylbis(2-propyl-4,6-di-ⁱpropyl-1-indenyl)hafniumdichlorid
Dimethylsilandiylbis(2-butyl-4,6-di-ⁱpropyl-1-indenyl)hafniumdichlorid
Dimethylsilandiylbis(2-ⁱpropyl-4,6-di-ⁱpropyl-1-indenyl)hafniumdichlorid
Dimethylsilandiylbis(2-^{t}butyl-4,6-di-ⁱpropyl-1-indenyl)hafniumdichlorid
Dimethylsilandiylbis(2-trimethylsilyl-4,6-di-ⁱpropyl-1-indenyl)hafniumdichlorid
Dimethylsilandiylbis(2-phenyl-4,6-di-ⁱpropyl-1-indenyl)hafniumdichlorid
Dimethylsilandiylbis(2-methyl-1-benzindenyl)hafniumdichlorid
Dimethylsilandiylbis(2-ethyl-1-benzindenyl)hafniumdichlorid
Dimethylsilandiylbis (2-propyl-1-benzindenyl)hafniumdichlorid
Dimethylsilandiylbis(2-butyl-1-benzindenyl)hafniumdichlorid
Dimethylsilandiylbis(2-ⁱpropyl-1-benzindenyl)hafniumdichlorid
Dimethylsilandiylbis(2-^{t}butyl-1-benzindenyl)hafniumdichlorid
Dimethylsilandiylbis(2-trimethylsilyl-1-benzindenyl)hafniumdichlorid
Dimethylsilandiylbis(2-phenyl-1-benzindenyl)hafniumdichlorid
Dimethylsilandiylbis(2-methyl-4-phenyl-1-indenyl)hafniumdichlorid
Dimethylsilandiylbis(2-ethyl-4-phenyl-1-indenyl)hafniumdichlorid
Dimethylsilandiylbis(2-propyl-4-phenyl-1-indenyl)hafniumdichlorid
Dimethylsilandiylbis(2-butyl-4-phenyl-1-indenyl)hafniumdichlorid
Dimethylsilandiylbis(2-ⁱpropyl-4-phenyl-1-indenyl)hafniumdichlorid
Dimethylsilandiylbis(2-^{t}butyl-4-phenyl-1-indenyl)hafniumdichlorid
Dimethylsilandiylbis(2-trimethylsilyl-4-phenyl-1-indenyl)hafniumdichlorid
Dimethylsilandiylbis(2-phenyl-4-phenyl-1-indenyl)hafniumdichlorid
Dimethylsilandiylbis(2-methyl-4-naphthyl-1-indenyl)hafniumdichlorid
Dimethylsilandiylbis(2-ethyl-4-naphthyl-1-indenyl)hafniumdichlorid
Dimethylsilandiylbis(2-propyl-4-naphthyl-1-indenyl)hafniumdichlorid
Dimethylsilandiylbis(2-butyl-4-naphthyl-1-indenyl)hafniumdichlorid
Dimethylsilandiylbis(2-ⁱpropyl-4-naphthyl-1-indenyl)hafniumdichlorid
Dimethylsilandiylbis(2-^{t}butyl-4-phenyl-1-indenyl)hafniumdichlorid
Dimethylsilandiylbis(2-trimethylsilyl-4-naphthyl-1-indenyl)hafniumdichlorid
Dimethylsilandiylbis(2-phenyl-4-naphthyl-1-indenyl)hafniumdichlorid
sowie die analogen diphenylsilylenverbrückten Komplexe.

Die erfindungsgemäßen Zinnverbindungen sind solche der allgemeinen Formel II 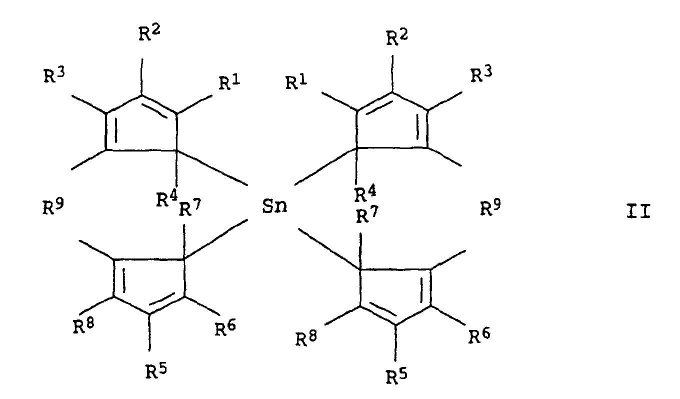 worin
- R¹ bis R⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
- R¹¹: C₁- bis C₁₀-Alkyl, C₆- bis C₁₅-Aryl oder C₃- bis C₁₀-Cycloalkyl,
- R⁹: 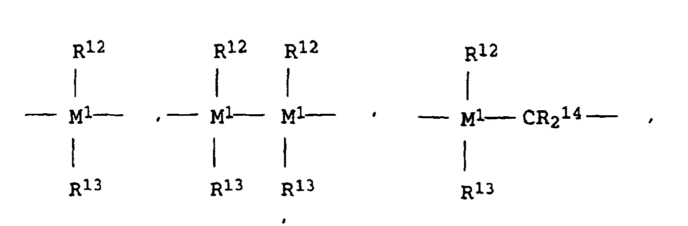 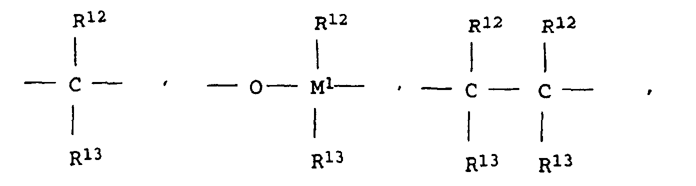 = BR¹², = AlR¹², -Ge-, -O-, -S-, SO, = SO₂, = NR¹², = CO, = PR¹² oder = P(O)R¹² ist, wobei R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist.
Vorzugsweise liegen die Zinnverbindungen II in racemischer Form vor. Besonders bevorzugt sind solche Zinnverbindungen II in welcher die gleichen oder verschiedenen Substituenten R², R⁵
C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl oder Si(R¹¹)₃ mit R¹¹
C₁- bis C₁₀-Alkyl, C₆- bis C₁₅-Aryl oder C₃- bis C₁₀-Cycloalkyl, bedeuten. Ganz besonders bevorzugt sind solche Zinnverbindungen II worin R¹, R³, R⁴, R⁶, R⁸ Wasserstoff bedeuten und R², R⁵ gleich sind und Methyl, Ethyl, n-Propyl, insbesondere tert.-Butyl bedeuten.

Die erfindungsgemäßen Zinnverbindungen werden üblicherweise durch die Umsetzung eines Cyclopentachienderivats III 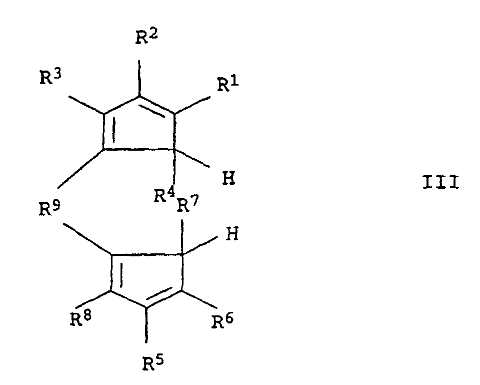 worin
- R¹ bis R⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
- R¹¹: C₁- bis C₁₀-Alkyl, C₆- bis C₁₅-Aryl oder C₃- bis C₁₀-Cycloalkyl,
- R⁹: 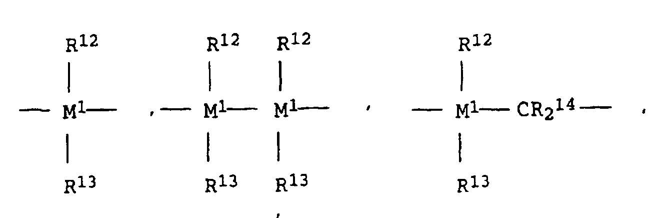 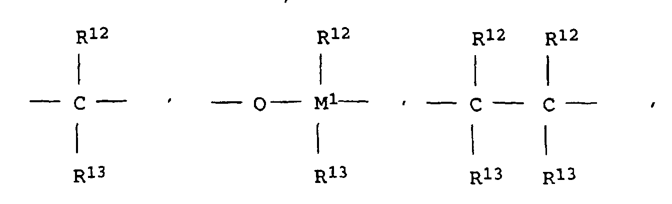 = BR¹², = AlR¹², -Ge-, -O-, -S-, = SO, = SO₂, = NR¹², = CO, = PR¹² oder = P(O)R¹² ist, wobei R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium bedeuten
mit einem Zinntetraamid der allgemeinen Formel IV 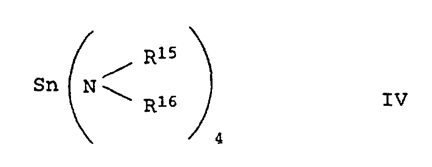
wobei R¹⁵, R¹⁶ gleich oder verschieden und C₁-C₁₀-Alkyl, C₃-C₁₀-Cycloalkyl, C₁-C₁₀-Fluoralkyl, C₆-C₁₀-Fluoraryl, C₆-C₁₀-Aryl, C₇-C₄₀-Arylalkyl, C₇-C₄₀-Alkylaryl bedeutet, erhalten.

Es wird hierbei üblicherweise in einem organischen Lösungsmittel, vorzugsweise in einen Ether, wie Diethylether, Tetrahydrofuran und im Temperaturbereich von -78 bis 100°C, vorzugsweise im Bereich von 0 bis 60°C gearbeitet. Das molare Verhältnis von III zu Zinntetraamid IV liegt üblicherweise im Bereich von 3:1 bis 1:3 vorzugsweise bei 2:1.

Die Synthese der praktisch meso-freien racemischen ansa-Metallocene I wird üblicherweise durch Umsetzung der bereits definierten Zinnverbindungen II mit vorzugsweise Metallhalogeniden, also Fluoriden, Bromiden, Iodiden, vorzugsweise Chloriden, der Metalle Titan, Zirkonium, Hafnium, Vanadium, Niob oder Tantal, vorzugsweise Zirkonium durchgeführt. In einem gut geeigneten Verfahren wird das Metallhalogenid, vorzugsweise Chlorid, in einem organischen Lösungsmittel, vorzugsweise aromatische, aliphatische Kohlenwasserstoffe oder Ether, also Toluol, Heptan, Tetrahydrofuran, suspendiert und die Zinnverbindung II, vorzugsweise in den genannten Lösungsmitteln gelöst, bei einer Temperatur im Bereich von -78 bis +150°C, vorzugsweise 0 bis 100°C, zugegeben. Das Molverhältnis Übergangsmetallhalogenid: Zinnverbindung II liegt üblicherweise im Bereich von 3:1 bis 1:3, vorzugsweise 2:1 bis 1:2, insbesondere bei 2:1.

Das erfindungsgemäße Verfahren liefert praktisch "meso-freie" racemische ansa-Metallocenkomplexe I. Die Analyse auf meso- oder racem-Form geschah mittels 1 H- und/oder 13C-NMR-Spektroskopie.

Die nach dem erfindungsgemäßen Verfahren erhältlichen racemischen ansa-Metallocene I können als Katalysatoren oder als Bestandteil von Katalysatorsystemen, vorzugsweise bei der Olefinpolymerisation, verwendet werden.

### Beispiele

### Beispiel 1

### Synthese von rac-4,4'-Spirobis(8-sila-4-stanna-indacen)

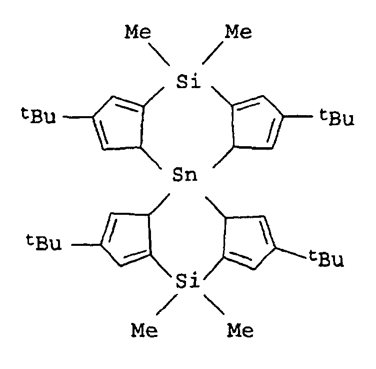

Es wurden 1,0 mL Sn(NMe₂)₄ (6 mmol) in 50 ml Ether gelöst. Diese etherische Tetrakis(dimethylamino)zinn Lösung wurde im Verlauf von 30 min zu einer Lösung aus 3,3 g Dimethylbis(3-tert-butylcyclopentadienyl)silan (11 mmol) und 100 ml Ether zugetropft. Dabei färbt sich die Lösung goldgelb und es entweicht Dimethylamin aus dem Reaktionsgemisch. Man ließ das Reaktionsgemisch noch über Nacht rühren und verringerte dann bei Raumtemperatur am Vakuum das Lösungsmittelvolumen um ca. 80 mL. Es wurde noch solange gerührt, bis das Tetrakis(dimethylamino)zinn NMR-spektroskopisch nicht mehr nachzuweisen war. Danach wurde das Lösungsmittel vollständig entfernt und der Rückstand mit Pentan versetzt. Es fiel ein hellgelber Niederschlag bestehend aus rac-4,4'-Spirobis(8-sila-4-stanna-indacen) aus. Dieser Niederschlag wurde durch Filtration von der Lösung abgetrennt und mit wenig kaltem Pentan gewaschen. Einengen der Lösung führte zur erneuten Kristallisation. Röntgentaugliche Kristalle wurden durch Kristallisation aus Ether erhalten.

| | |
|---|---|
| MG(C₄₀H₆₀Si₂Sn) | 715,8 g/mol |
| Ausbeute | 2,91 g(4,1 mmol) 74 % |

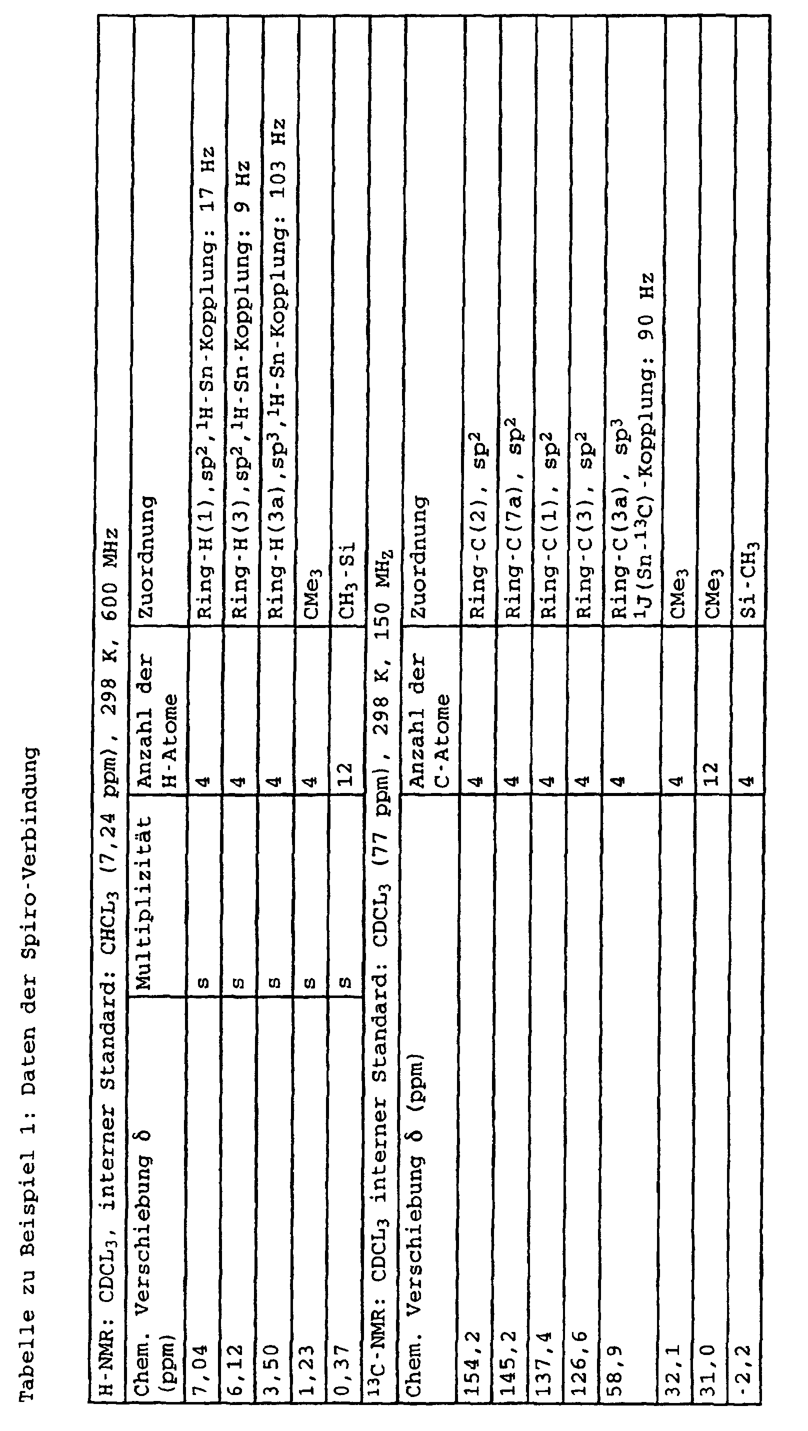

### Beispiel 2

### Darstellung von rac-Dimethylsilandiylbis(3-tert-butylcyclopentadienyl)zirkondchlorid

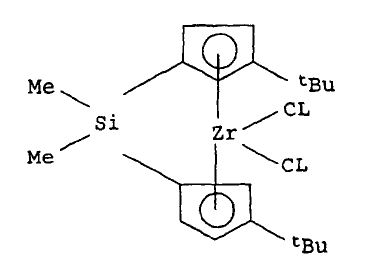

In 200 mL Toluol wurden 0,4 g ZrCL₄ (1,72 mmol) suspendiert. Unter Rühren wurde nun tropfenweise eine Lösung von 0,62 g rac-4,4'-spirobis(8-sila-4-stanna-Indacen) (0,86 mmol) in 250 mL Toluol hinzugegeben. Die entstanden intensiv gelbe Lösung wurde über Nacht gerührt, dann das Lösungsmittel am Vakuum entfernt und durch 200 mL Pentan ersetzt. Man trennte nun von eventuell vorhandenen unlöslichen Rückständen ab, entfernte erneut das Lösungsmittel bei Raumtemperatur. Durch diesen Vorgang wurde auch gleichzeitig das entstandene Zinntetrachlorid abgetrennt. Zurück blieb reines rac-Zirconocen.

| | |
|---|---|
| MG (C₂₀H₃₀Ci₂SiZr) | 460,7 g/mol |
| Ausbeute | 0,64 g(1,39 mmol) 80 % bezogen auf ZrCL₄ |

## Patentansprüche

1. Verfahren zur stereoselektiven Herstellung von racemischen ansa-Metallocenkomplexen der allgemeinen Formel I 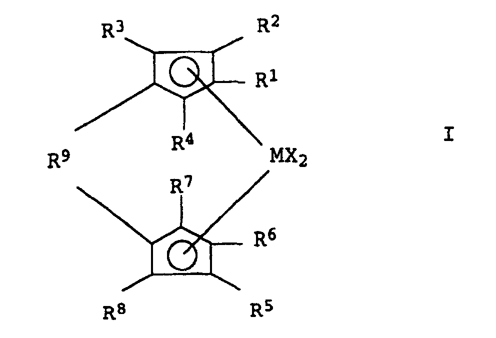 in der die Substituenten und Indices folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR¹⁰,
wobei R¹⁰ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 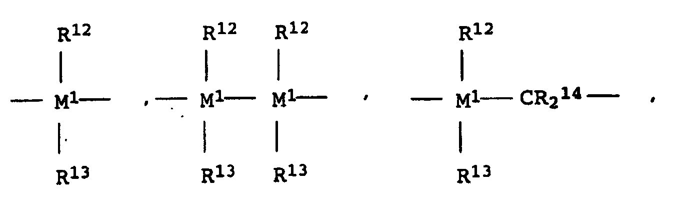 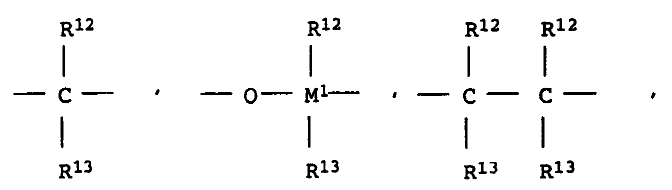 = BR¹², = AlR¹², -Ge-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist
durch Umsetzung einer in der racemischen Form vorliegenden Zinnverbindung der allgemeinen Formel II 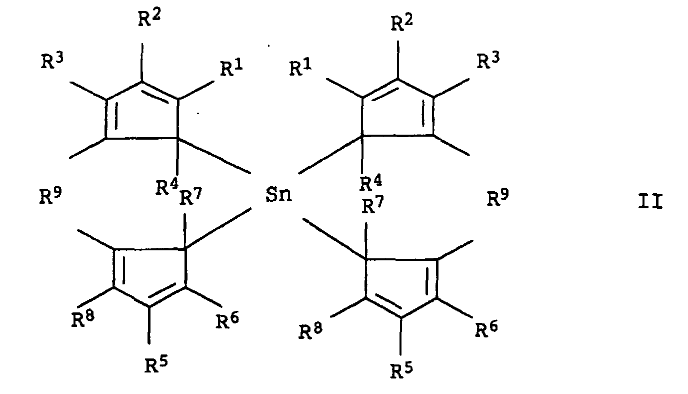 worin
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 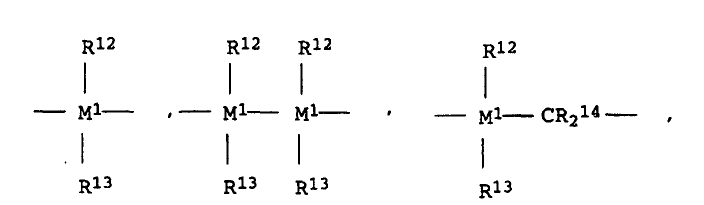 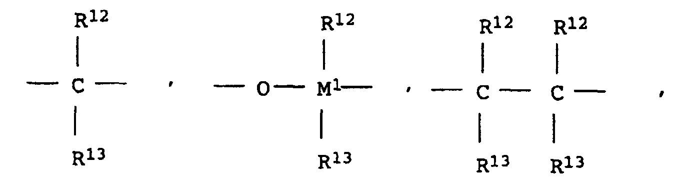 = BR¹², = AlR¹², -Ge-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist
mit einer Übergangsmetallverbindung der allgemeinen Formel MXₙ
worin
M Titan, Zirkonium, Hafnium, Vanadium, Niob oder Tantal,
X Fluor, Chlor, Brom, Iod oder -OR¹⁰,
wobei R¹⁰ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest
n eine ganze Zahl von 3 bis 5 bedeutet.

2. Verfahren nach Anspruch 1, **dadurch gekennzeichnet, daß** die Substituenten R² und R⁵, gleich oder verschieden sind und C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, oder Si(R¹¹)₃ mit R¹¹ C₁- bis C₁₀-Alkyl, C₆- bis C₁₅-Aryl oder C₃- bis C₁₀-Cycloalkyl, bedeuten

3. Verfahren nach den Ansprüchen 1 oder 2, **dadurch gekennzeichnet, daß** 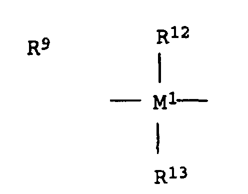 wobei R¹² und R¹³
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ jeweils mit den sie verbindenden Atomen einen Ring bilden, und M¹ Silicium bedeutet.

4. Zinnverbindungen der allgemeinen Formel II 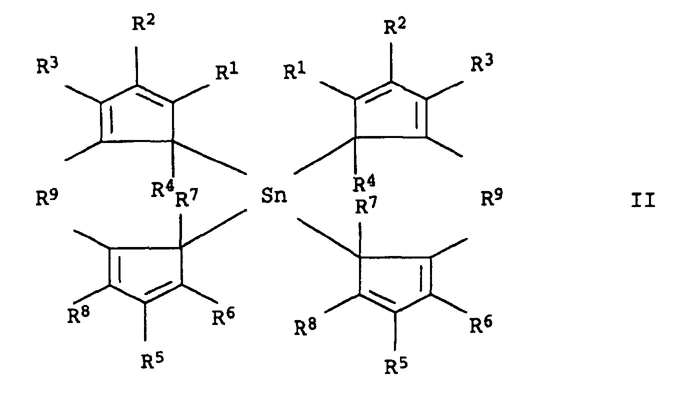 worin
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 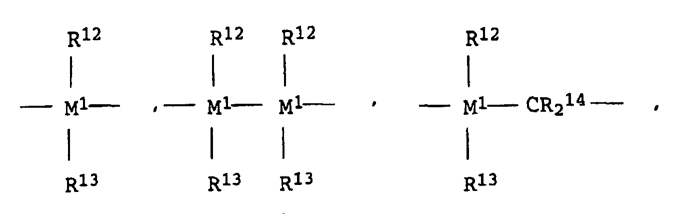 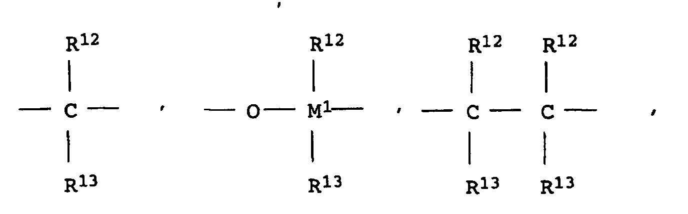 = BR¹², = AlR¹², -Ge-, -O-, -S-, = SO, = SO₂, = NR¹², = CO, = PR¹² oder = P(O)R¹² ist, wobei R¹², R¹³ und R¹⁴
gleich oder verschieden sind und ein wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist

5. Zinnverbindungen nach Anspruch 4, wobei die Substituenten R² und R⁵, gleich oder verschieden sind und
C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, oder Si(R¹¹)₃ mit R¹¹ C₁- bis C₁₀-Alkyl, C₆- bis C₁₅-Aryl oder C₃- bis C₁₀-Cycloalkyl, bedeuten.

6. Zinnverbindungen II nach den Ansprüchen 4 oder 5, wobei
R⁹ 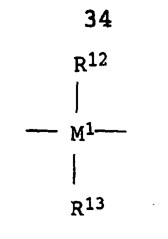
wobei R¹² und R¹³
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ jeweils mit den sie verbindenden Atomen einen Ring bilden, und M¹ Silicium bedeutet.

7. Zinnverbindungen II nach den Ansprüchen 4 bis 6, wobei die Zinnverbindungen II in der racemischen Form vorliegen.

8. Verfahren zur Herstellung von Zinnverbindungen der allgemeinen Formel II 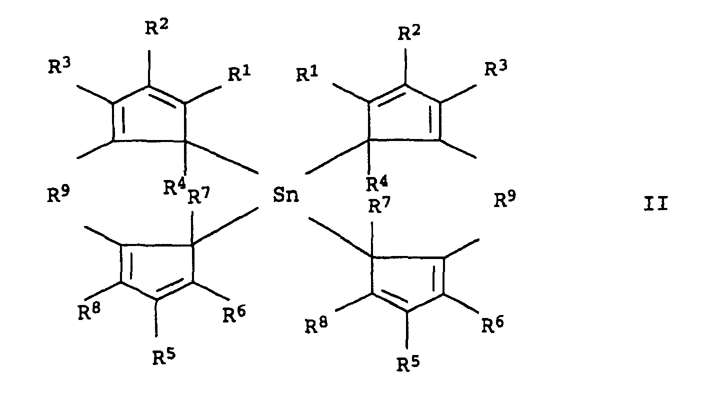 worin
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 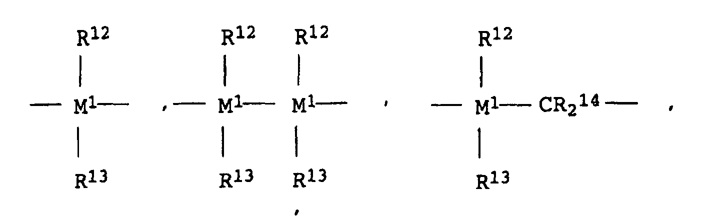 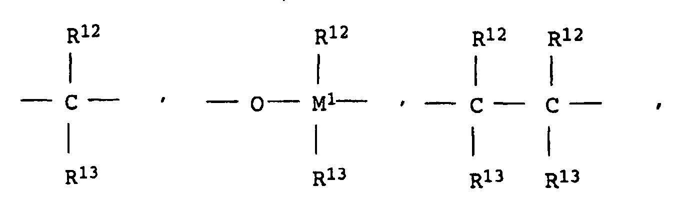 = BR¹², = AlR¹², -Ge-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist
durch Umsetzung eines verbrückten Cyclopentadienderivats der allgemeinen Formel III 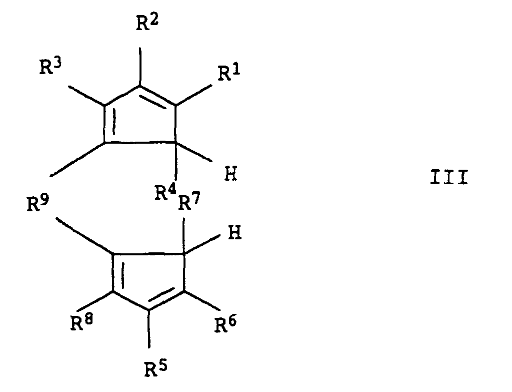
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 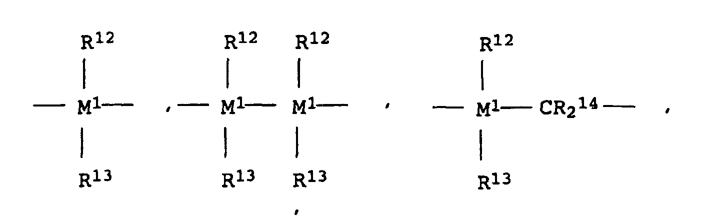 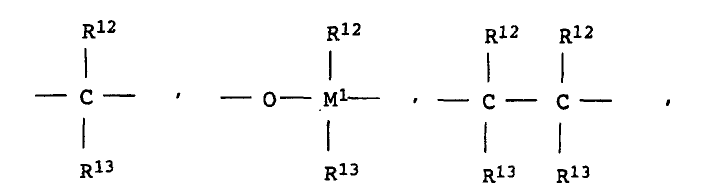 = BR¹², = AlR¹², -Ge-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium oder Germanium ist
mit einem Zinntetraamid der allgemeinen Formel IV 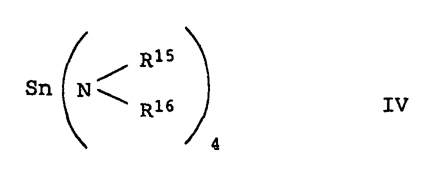 wobei R¹⁵, R¹⁶ gleich oder verschieden und C₁-C₁₀-Alkyl, C₃-C₁₀-Cycloalkyl, C₁-C₁₀-Fluoralkyl, C₆-C₁₀-Fluoraryl, C₆-C₁₀-Aryl, C₇-C₄₀-Arylalkyl, C₇-C₄₀-Alkylaryl bedeutet.

## Claims

1. A process for the stereoselective preparation of racemic ansa-metallocene complexes of the formula I 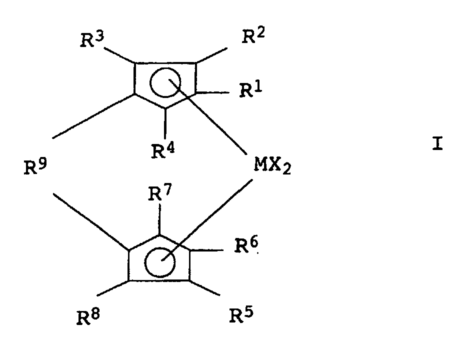 where the substituents and indices have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR¹⁰,
where R¹⁰ is C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 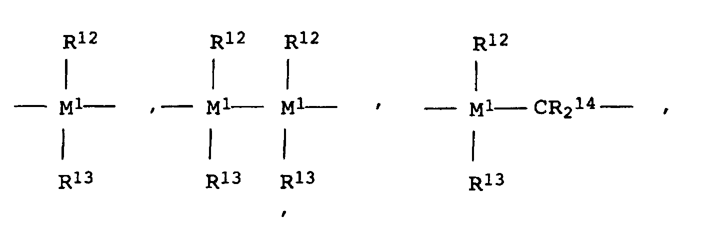 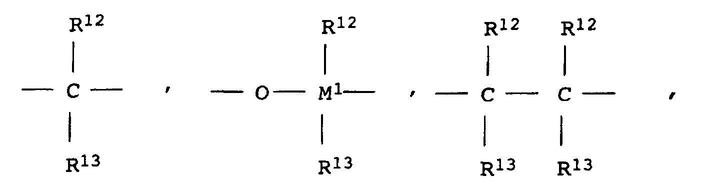 = BR¹², = AlR¹², -Ge-, -O-, -S-, = SO, = SO₂, = NR¹², = CO, = PR¹² or = P(O)R¹², where R¹², R¹³ and R¹⁴
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ or R¹² and R¹⁴ in each case together with the atoms connecting them form a ring, and
M¹ is silicon or germanium,
by reacting a tin compound of the formula II in the racemic form 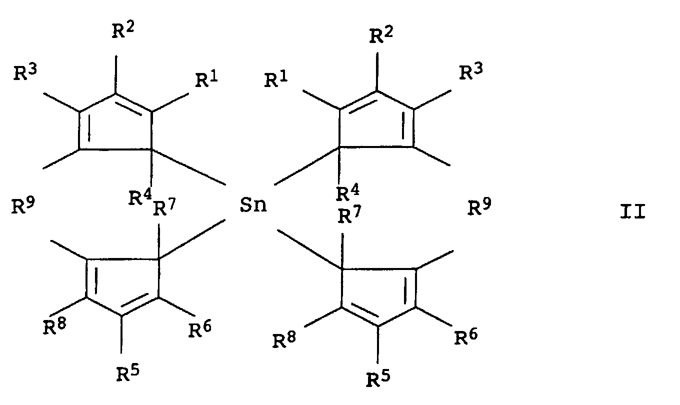 where
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 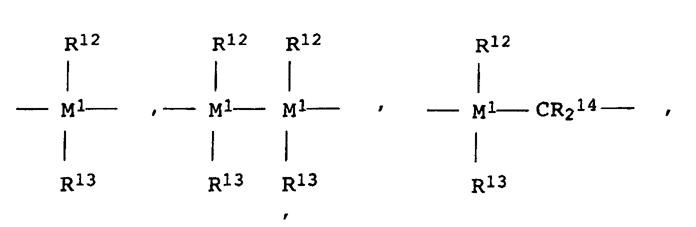 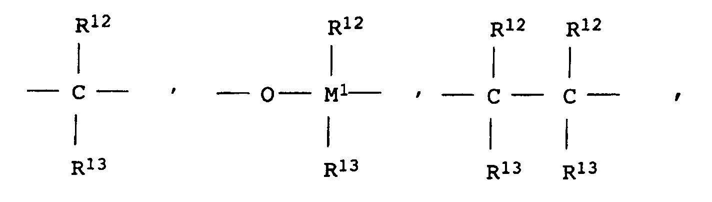 = BR¹², = AlR¹², -Ge-, -O-, -S-, = SO, = SO₂, = NR¹², = CO, = PR¹² or = P(O)R¹², where R¹², R¹³ and R¹⁴
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ or R¹² and R¹⁴ in each case together with the atoms connecting them form a ring, and
M¹ is silicon or germanium,
with a transition metal compound of the formula MXₙ where
M is titanium, zirconium, hafnium, vanadium, niobium or tantalum,
X is fluorine, chlorine, bromine, iodine or -OR¹⁰,
where R¹⁰ is C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
n is an integer from 3 to 5.

2. A process as claimed in claim 1, wherein the substituents R² and R⁵ are identical or different and are C₁-C₁₀-alkyl, 5- to 7-membered cycloalkyl which in turn may bear a C₁-C₁₀-alkyl group as substituent, C₆-C₁₅-aryl or arylalkyl, or Si(R¹¹)₃ where R¹¹ is C₁-C₁₀-alkyl, C₆-C₁₅-aryl or C₃-C₁₀-cycloalkyl.

3. A process as claimed in claim 1 or 2, wherein
R⁹ is 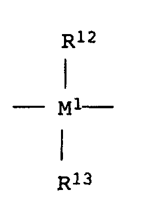 where R¹² and R¹³
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ together with the atoms connecting them form a ring, and M¹ is silicon.

4. A tin compound of the formula II 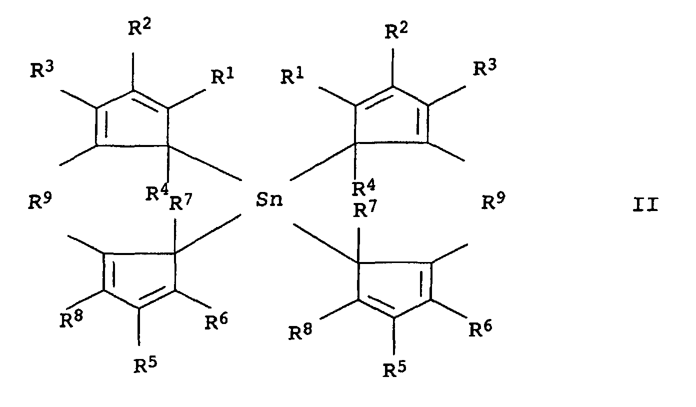 where
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 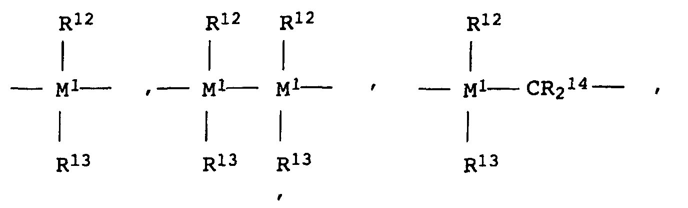 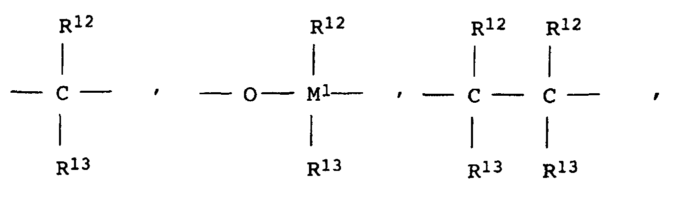 = BR¹², = AlR¹², -Ge-, -O-, -S-, = SO, = SO₂, = NR¹², = CO, = PR¹² or = P(O)R¹², where R¹², R¹³ and R¹⁴
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ or R¹² and R¹⁴ in each case together with the atoms connecting them form a ring, and
M¹ is silicon or germanium.

5. A tin compound as claimed in claim 4, wherein the substituents R² and R⁵ are identical or different and are
C₁-C₁₀-alkyl, 5- to 7-membered cycloalkyl which may in turn bear a C₁-C₁₀-alkyl group as substituent, C₆-C₁₅-aryl or arylalkyl, or Si(R¹¹)₃ where R¹¹ is C₁- to C₁₀-alkyl, C₆-C₁₅-aryl or C₃-C₁₀-cycloalkyl.

6. A tin compound II as claimed in claim 4 or 5, wherein
R⁹ is 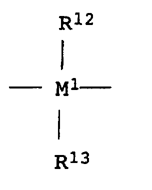 where R¹² and R¹³
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ together with the atoms connecting them form a ring, and M¹ is silicon.

7. A tin compound II as claimed in any of claims 4 to 6 which is in the racemic form.

8. A process for preparing tin compounds of the formula II 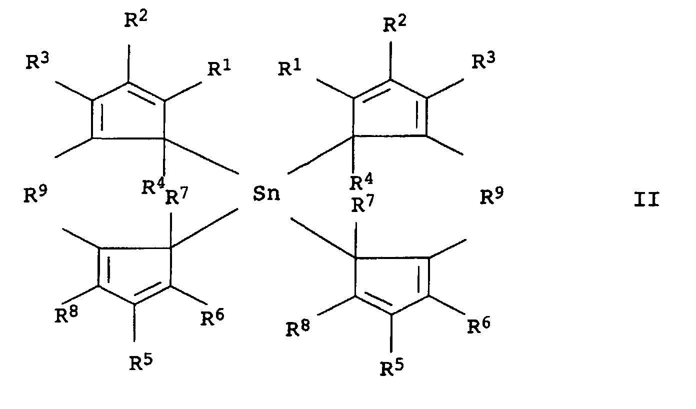 where
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 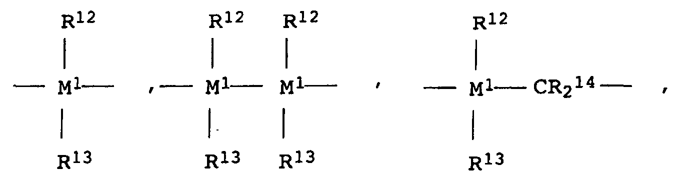 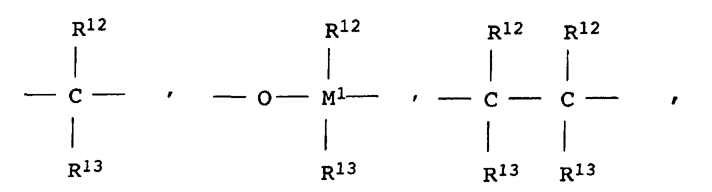 = BR¹², = AlR¹², -Ge-, -O-, -S-, = SO, = SO₂, = NR¹², = CO, = PR¹² or = P(O)R¹², where R¹², R¹³ and R¹⁴
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ or R¹² and R¹⁴ in each case together with the atoms connecting them form a ring, and
M¹ is silicon or germanium,
by reacting a bridged cyclopentadiene derivative of the formula III 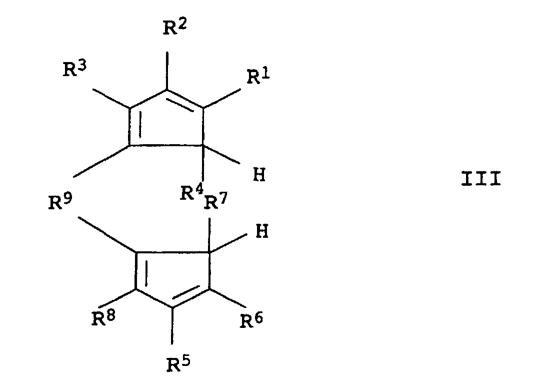 where
R¹ to R⁸ are hydrogen, C₁-C₁₀-alkyl, 5- to 7-membered cycloalkyl which in turn may bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 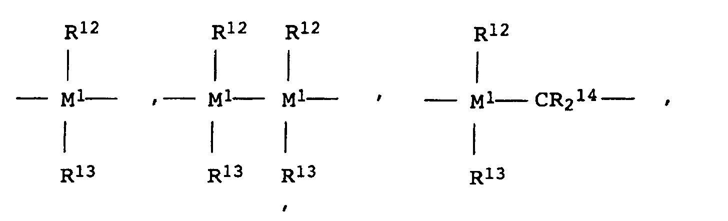 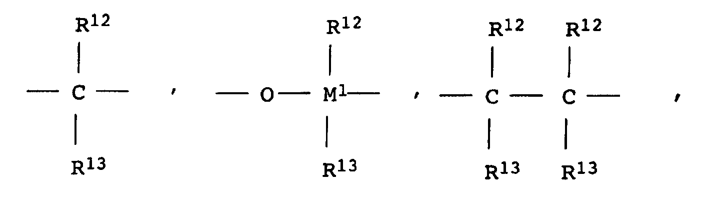 = BR¹², = AlR¹², -Ge-, -O-, -S-, = SO, = SO₂, = NR¹², = CO, = PR¹² or = P(O)R¹², where R¹², R¹³ and R¹⁴
are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹² and R¹³ or R¹² and R¹⁴ in each case together with the atoms connecting them form a ring, and
M¹ is silicon or germanium,
with a tin tetraamide of the formula IV 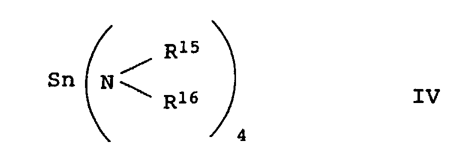 where R¹⁵, R¹⁶ are identical or different and are C₁-C₁₀-alkyl, C₃-C₁₀-cycloalkyl, C₁-C₁₀-fluoroalkyl, C₆-C₁₀-fluoroaryl, C₆-C₁₀-aryl, C₇-C₄₀-arylalkyl or C₇-C₄₀-alkylaryl.

## Revendications

1. Procédé pour la préparation stéréosélective de complexes d'ansa-métallocènes racémiques de formule générale I 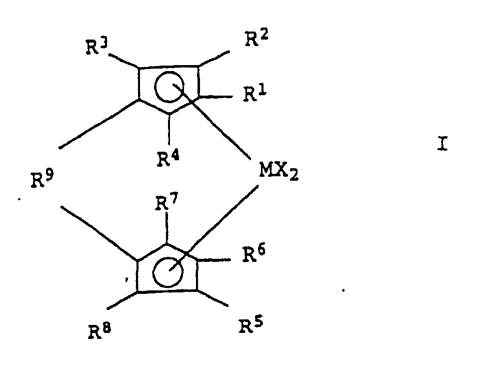 dans laquelle les substituants et indices ont la signification suivante:
M titane, zirconium, hafnium, vanadium, niobium ou tantale,
X fluor, chlore, brome, iode, hydrogène, alkyle en C₁ à C₁₀, aryle en C₆ à C₁₅ ou -OR¹⁰,
tandis que
R¹⁰ désigne un groupe alkyle en C₁ à C₁₀, aryle en C₆ à C₁₅, alkylaryle, arylalkyle, fluoroalkyle ou fluoroaryle avec à chaque fois 1 à 10 atomes de C dans le reste alkyle et 6 à 20 atomes de C dans le reste aryle,
R¹ à R⁸ sont un hydrogène, alkyle en C₁ à C₁₀, cycloalkyle à 5 à 7 chaînons, qui à son tour peut porter un alkyle en C₁ à C₁₀ comme substituant, aryle en C₆ à C₁₅ ou arylalkyle, tandis qu'éventuellement également deux restes voisins peuvent former ensemble des groupes cycliques présentant 4 à 15 atomes de C, ou Si(R¹¹)₃, tandis que
R¹¹ est un alkyle en C₁ à C₁₀, aryle en C₆ à C₁₅ ou cycloalkyle en C₃ à C₁₀,
R⁹ est un 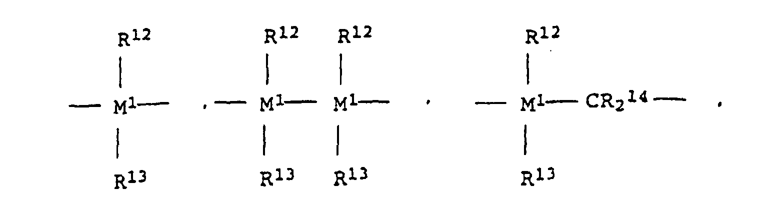 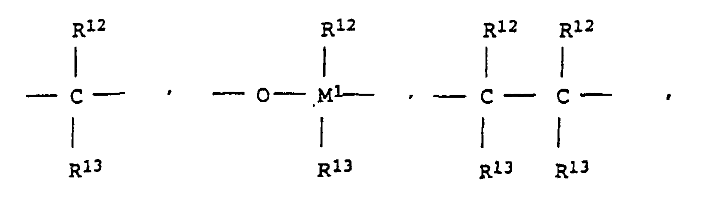 =BR¹², =AlR¹², -Ge-, -O-, -S-, =SO, =SO₂, =NR¹², =CO, =PR¹² ou P(O)R¹²,
tandis que
R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment un cycle avec les atomes qui les relient, et
M¹ est le silicium ou le germanium,
par réaction d'un composé d'étain de formule générale II présent sous la forme racémique 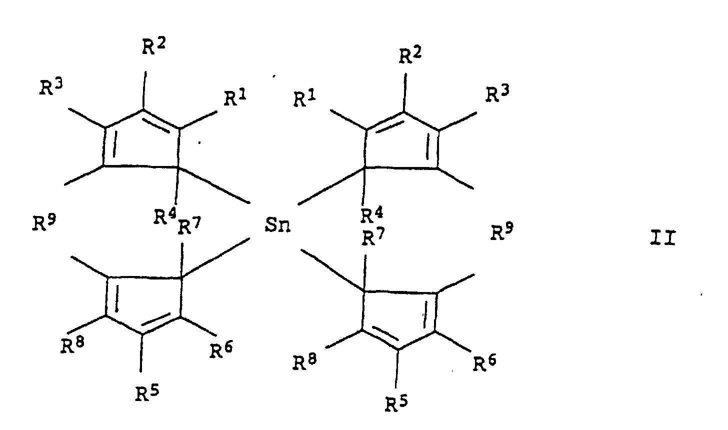 où
R¹ à R⁸ sont un hydrogène, alkyle en C₁ à C₁₀, cycloalkyle à 5 à 7 chaînons, qui à son tour peut porter un alkyle en C₁ à C₁₀ comme substituant, aryle en C₆ à C₁₅ ou arylalkyle, tandis qu'éventuellement également deux restes voisins peuvent former ensemble des groupes cycliques présentant 4 à 15 atomes de C, ou Si(R¹¹)₃, tandis que
R¹¹ est un alkyle en C₁ à C₁₀, aryle en C₆ à C₁₅ ou cycloalkyle en C₃ à C₁₀,
R⁹ est un 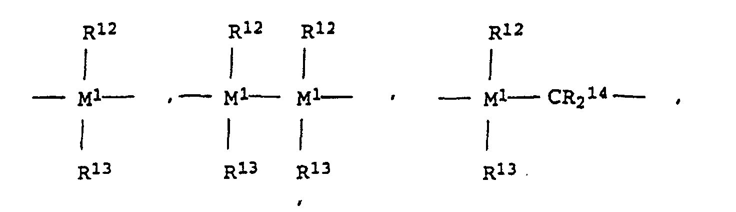 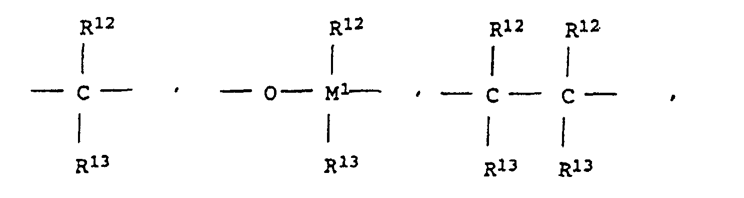 =BR¹², =AlR¹², -Ge-, -O-, -S-, =SO, =SO₂, =NR¹², =CO, =PR¹² ou P(O)R¹²,
tandis que
R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment un cycle à chaque fois avec les atomes qui les relient, et
M¹ est le silicium ou le germanium,
avec un composé de métal de transition de formule générale MXₙ
tandis que
M désigne le titane, le zirconium, le hafnium, le vanadium, le niobium ou le tantale,
X représente le fluor, le chlore, le brome, l'iode ou -OR¹⁰,
tandis que
R¹⁰ désigne un alkyle en C₁ à C₁₀, un aryle en C₆ à C₁₅, un alkylaryle, un arylalkyle, un fluoroalkyle ou un fluoroaryle ayant à chaque fois 1 à 10 atomes de C dans le reste alkyle et 6 à 20 atomes de C dans le reste aryle,
n représente un nombre entier de 3 à 5.

2. Procédé selon la revendication 1, **caractérisé par le fait que** les substituants R² et R⁵ sont identiques ou différents et représentent des groupes alkyle en C₁ à C₁₀, cycloalkyle ayant 5 à 7 chaînons, qui à son tour peut porter un alkyle en C₁ à C₁₀ comme substituant, aryle en C₆ à C₁₅ ou arylalkyle, ou Si(R¹¹)₃ avec R¹¹ alkyle en C₁ à C₁₀, aryle en C₆ à C₁₅ ou cycloalkyle en C₃ à C₁₀.

3. Procédé selon les revendications 1 ou 2, **caractérisé par le fait que** R⁹ désigne 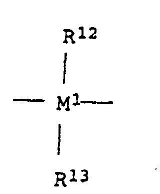 dans lequel R¹² et R¹³
sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle e C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ forment un cycle à chaque fois avec les atomes qui les relient, et M¹ désigne le silicium.

4. Composés d'étain de formule générale II 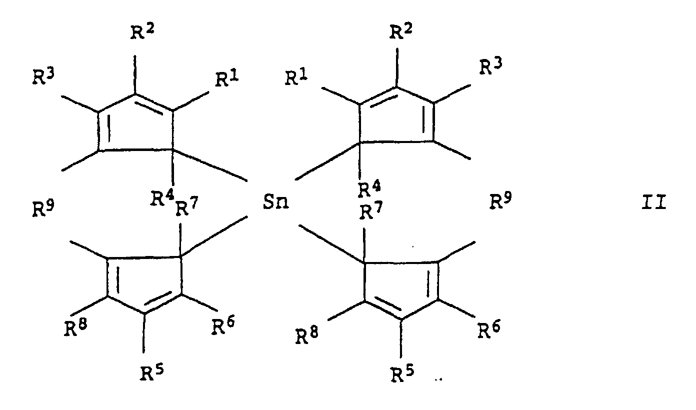 où
R¹ à R⁸ désignent l'hydrogène, un alkyle en C₁ à C₁₀, un cycloalkyle ayant 5 à 7 chaînons, qui peut à son tour porter un alkyle en C₁ à C₁₀ comme substituant, un aryle en C₆ à C₁₅ ou un arylalkyle, tandis qu'éventuellement également deux restes voisins peuvent former ensemble des groupes cycliques présentant 4 à 15 atomes de carbone, ou Si(R¹¹)₃ avec
R¹¹ alkyle en C₁ à C₁₀, aryle en C₆ à C₁₅ ou cycloalkyle en C₃ à C₁₀,
R⁹ est un 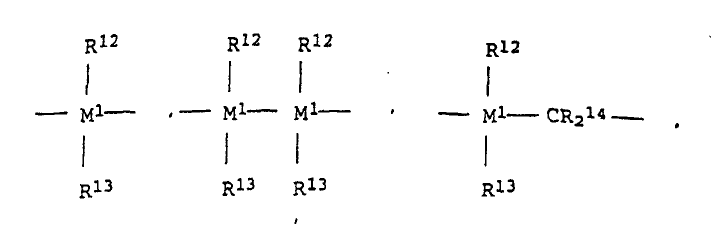 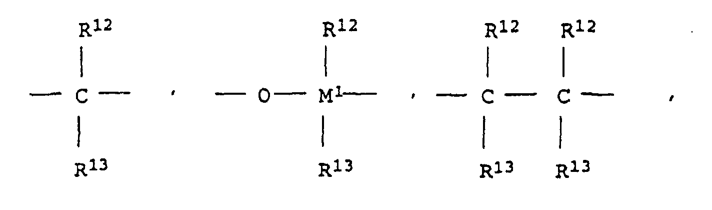 =BR¹², =AlR¹², -Ge-, -O-, -S-, =SO, =SO₂, =NR¹², =CO, =PR¹² ou P(O)R¹²,
tandis que
R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment un cycle à chaque fois avec les atomes qui les relient, et
M¹ est le silicium ou le germanium.

5. Composés d'étain selon la revendication 4, dans lesquels les substituants R² et R⁵ sont identiques ou différents et représentent un groupe alkyle en C₁ à C₁₀, cycloalkyle ayant 5 à 7 chaînons, qui peut à son tour porter un alkyle e C₁ à C₁₀ comme substituant, aryle en C₆ à C₁₅ ou arylalkyle, ou Si(R¹¹)₃ tandis que R¹¹ désigne un alkyle en C₁ à C₁₀, un aryle en C₆ à C₁₅ ou un cycloalkyle en C₃ à C₁₀.

6. Composés d'étain II selon les revendications 4 ou 5, dans lesquels R⁹ désigne 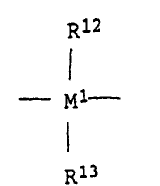 dans lequel R¹² et R¹³
sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle e C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ forment un cycle à chaque fois avec les atomes qui les relient, et M¹ désigne le silicium.

7. Composés d'étain II selon les revendications 4 à 6, dans lesquels les composés d'étain II se présentent sous la forme racémique.

8. Procédé pour la préparation de composés d'étain de formule générale II 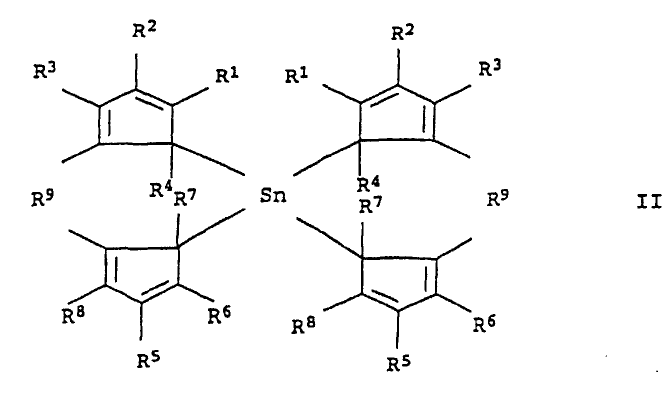 où
R¹ à R⁸ désignent l'hydrogène, un alkyle en C₁ à C₁₀, un cycloalkyle ayant 5 à 7 chaînons, qui peut à son tour porter un alkyle en C₁ à C₁₀ comme substituant, un aryle en C₆ à C₁₅ ou un arylalkyle, tandis qu'éventuellement également deux restes voisins peuvent former ensemble des groupes cycliques présentant 4 à 15 atomes de carbone, ou Si(R¹¹)₃ avec
R¹¹ alkyle en C₁ à C₁₀, aryle en C6 à C₁₅ ou cycloalkyle en C₃ à C₁₀,
R⁹ est un 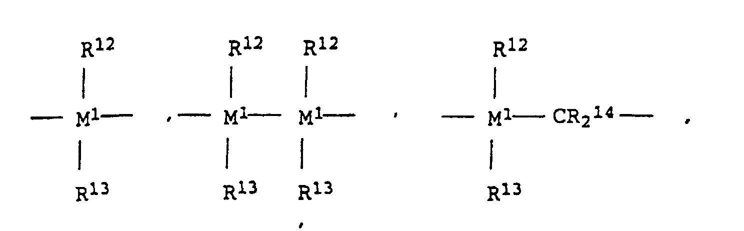 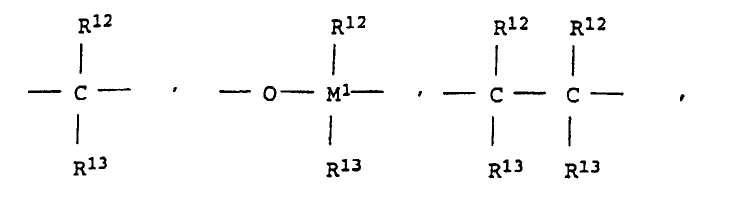 =BR¹², =AlR¹², -Ge-, -O-, -S-, =SO, =SO₂, =NR¹², =CO, =PR¹² ou P(O)R¹²,
tandis que
R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment un cycle à chaque fois avec les atomes qui les relient, et
M¹ est le silicium ou le germanium,
par réaction d'un dérivé de cyclopentadiène ponté de formule générale III 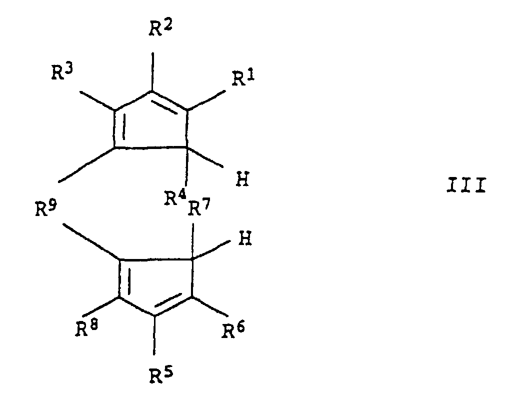 où
R¹ à R⁸ désignent l'hydrogène, un alkyle en C₁ à C₁₀, un cycloalkyle ayant 5 à 7 chaînons, qui peut à son tour porter un alkyle en C₁ à C₁₀ comme substituant, un aryle en C₆ à C₁₅ ou un arylalkyle, tandis qu'éventuellement également deux restes voisins peuvent former ensemble des groupes cycliques présentant 4 à 15 atomes de carbone, ou Si(R¹¹)₃ avec
R¹¹ alkyle en C₁ à C₁₀, aryle en C₆ à C₁₅ ou cycloalkyle en C₃ à C₁₀,
R⁹ est un 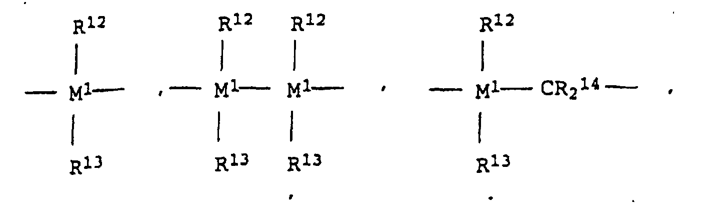 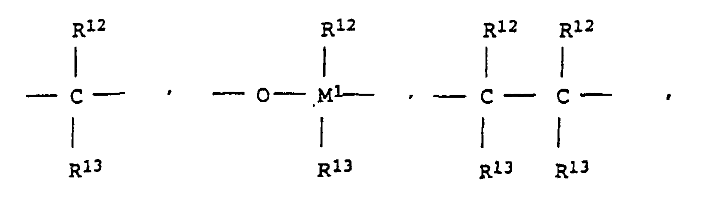 =BR¹², =AlR¹², -Ge-, -O-, -S-, =SO, =SO₂, =NR¹², =CO, =PR¹² ou P(O)R¹²,
tandis que
R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment un cycle à chaque fois avec les atomes qui les relient, et
M¹ est le silicium ou le germanium,
avec un tétraamide d'étain de formule générale IV 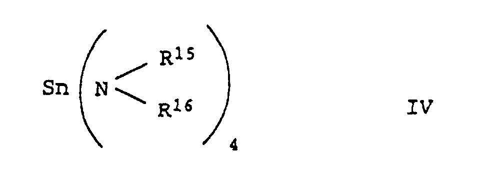 où R¹⁵, R¹⁶ sont identiques ou différents, et désignent un groupe alkyle e C₁-C₁₀, cycloalkyle en C₃-C₁₀, fluoroalkyle en C₁-C₁₀, fluoroaryle en C₆-C₁₀, aryle en C₆-C₁₀, arylalkyle en C₇-C₄₀, alkylaryle en C₇-C₄₀.
